(19) Europäisches Patentamt / European Patent Office / Office européen des brevets

(11) **EP 4 054 145 B1**

(12) **EUROPEAN PATENT SPECIFICATION**

(45) Date of publication and mention
of the grant of the patent:
**10.01.2024   Bulletin 2024/02**

(21) Application number: **21160861.7**

(22) Date of filing: **05.03.2021**

(51) International Patent Classification (IPC):
**H04L 9/40** *(2022.01)*       **G06F 21/31** *(2013.01)*
**H04L 9/32** *(2006.01)*       **G06F 40/284** *(2020.01)*
**G06F 40/295** *(2020.01)*     **G06F 16/2458** *(2019.01)*
**G06F 16/93** *(2019.01)*      **G06F 40/216** *(2020.01)*
**G06F 40/30** *(2020.01)*      **G06V 30/40** *(2022.01)*

(52) Cooperative Patent Classification (CPC):
**G06F 21/31; G06F 16/94; G06F 40/216;
G06F 40/284; G06F 40/295; G06F 40/30;
G06V 30/40; H04L 9/3213; H04L 9/3234;
H04L 63/10;** G06F 2221/2141

(54) **DOCUMENT-BASED ACCESS CONTROL SYSTEM**

DOKUMENTENBASIERTES ZUGANGSKONTROLLSYSTEM

SYSTÈME DE CONTRÔLE D'ACCÈS À BASE DE DOCUMENTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.09.2022   Bulletin 2022/36**

(73) Proprietors:
- **Iggiotti, Cédric**
  **1534 Luxembourg (LU)**
- **Legros, Sébastien**
  **1526 Luxembourg (LU)**
- **Merlan, Olivier**
  **2737 Luxembourg (LU)**
- **Weiss, Corinne**
  **2737 Luxembourg (LU)**

(72) Inventors:
- **Iggiotti, Cédric**
  **1534 Luxembourg (LU)**
- **Legros, Sébastien**
  **1526 Luxembourg (LU)**
- **Merlan, Olivier**
  **2737 Luxembourg (LU)**
- **Weiss, Corinne**
  **2737 Luxembourg (LU)**

(74) Representative: **Richardt Patentanwälte PartG
mbB
Wilhelmstraße 7
65185 Wiesbaden (DE)**

(56) References cited:
**US-A1- 2013 124 525     US-A1- 2015 379 127
US-A1- 2019 354 596**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the invention

The present invention relates generally to the field of access control to software or hardware functions or to geographic regions, products, services, places, and more particularly to document-based access control methods.

### Background and related art

In the fields of physical security and information security, access control (AC) is the selective restriction of access to a place or other resource, e.g. a hardware function or a device or vehicle or a software function, e.g. a function providing access to sensitive data, for creating an account or a function for transferring money. The act of accessing may mean consuming, entering, or using a place, hardware- or software-function. Permission to access a resource is called authorization.

Commonly, access is controlled by login credentials such as a password. Often, documents, in particular ID-documents such as passports or ID cards, or credit cards, i.e., a physical object, is used in addition or instead of a password to obtain access to a resource. In general, document-based authentication schemes provide an extra level of security, because documents can be equipped with security elements and may comprise optically and/or digitally encoded data which can be read and processed automatically. For example, many countries began to issue machine-readable travel documents in the 1980s, e.g. machine-readable passports (MRP) comprising data on the identity page encoded in optical character recognition format. MRPs are standardized by the ICAO Document 9303 (endorsed by the International Organization for Standardization and the International Electrotechnical Commission as ISO/IEC 7501-1) and have a special machine-readable zone (MRZ), which is usually at the bottom of the identity page at the beginning of a passport. The machine-readable zone of a Type 3 travel document spans two lines, and each line is 44 characters long. The following information must be provided in the zone: name, passport number, nationality, date of birth, sex, and passport expiration date. There is room for optional, often country-dependent, supplementary information. The machine-readable zone of a Type 1 travel document spans three lines, and each line is 30 characters long. According to embodiments, the document comprises a Visual Inspection Zone (VIZ) in addition to or as an alternative for the MRZ, and the search string is derived from the VIZ.

Often, access to the resource shall not be provided to any person considered to be not-trustworthy. For example, countries generally have an interest in identifying criminals as they cross the border and preventing them from entering the country. Banks are not allowed to transfer money to the accounts of known terrorists or other criminals.

A common problem with document-based access control in the context of automated identification of non-trustworthy persons is that during the automated acquisition of names, IDs or other credentials printed in or on the document, errors occur which may result in a false negative result, meaning that a non-trustworthy person is not identified correctly and is granted access to a resource.

For example, some employee badges used for entering a company's premises may comprise a bar code encoding the employee-ID and name of a person. In most cases, the bar code will allow a quick and correct authentication of an employee. However, a bar code is not human-readable and the automated processing of a bar-code may also comprise errors: poor print quality is a common cause of a barcode problem. Differences in scanner aggressiveness can cause scanners to substitute characters and misread; others may fail to read a bar altogether. Individual bars may be difficult to recognize, e.g. because the print is rubbed off or dirty. Poor lighting conditions can also affect the scanning process. Errors in the scanning process may result in non-reads, but also in misreads meaning that individual characters can be missed, added or replaced. Another source of error is the optical sensor: Most often the cause can be traced to damaged or dirty optics, but faulty decode algorithms are a known cause, albeit a rare one.

In order to ensure that the credentials or person-related data can also be interpreted by a human, the user credentials are often printed on the document as alphanumerical strings. Here, the error rate is even higher as several characters look very similar and many different font types exist which impose a burden even for sophisticated optical-character-recognition approaches. So in case a user credential that was captured by an optical sensor is matched against a watchlist of credentials of not-trustworthy persons, there is a significant risk that no match will be detected because of an error in the optical string capturing and OCR process although the credentials of this person are actually comprised in the watchlist.

In case the user credential printed on a document is a person's name, the problem is even increased because of various spelling variants which typically exist for a person's name. Person names may comprise first, middle and surname, father name, mother name, and one or more titles or qualifiers which may sometimes be specified, sometimes not. The order of the names may vary and there may exist many spelling variants of one or more name parts. The situation for organization names is similar as an organization's name may or may not comprise e.g. an abbreviation for the legal form of the organization, a reference to the country or city where the organization is located, or the like.

Therefore, the security of current document-based access control approaches is often insufficient as the scanning of optically readable credentials is error prone. One approach to increase the security is to provide additional credentials in digital electronic form and/or to evaluate additional security elements such as holograms and/or to apply cryptographic authentication protocols. However, these approaches either slow down the authentication process or render the manufacturing of the ID-document more expensive.

A further, major difficulty with document-based access control in the context of automated identification is related to the high matching accuracy is associated with the disadvantage of low performance. In fact, the speed of automatic identification is a crucial element linked to the fact that the waiting time imposed on the person requesting access must be kept to a strict minimum, as only sub-second latency can actually create a satisfactory real-time experience. On the other hand, due to the sensitivity of the many access-restricted resources, it is necessary to achieve optimal accuracy of the document-based authentication process. However, a multitude of variants for the same name are possible due to errors related to data capture process. Prior approaches relying on calculating edit distances, phonetic or cultural similarities have demonstrated limitations in terms of accuracy or speed or both.

US patent application US 2019/0354596 A1 describes a computer-implemented method of record linkage. A given query entity of a query database and a set of reference entities from a master database are accessed; each entity accessed corresponds to an entry in a respective database, which is mapped to a set of words that are decomposed into tokens. For each reference entity, a closest token is identified therein for each token of the given query entity, via a given string metric. A number of closest tokens are thus respectively associated with highest scores of similarity between tokens of the query entity and tokens of each reference entity. An entity similarity score is computed based on said highest scores. A reference entity of the master database is identified, which is closest to said given query entity, based on the entity similarity score. Records of the given query entity are linked to records of the master database, based on the closest reference entity identified.

US patent application US 2015/0379127 A1 describes methods, systems, and computer program products for performing a fuzzy substring search. One computer-implemented method includes determining one or more tokens of an input string received from a client application, identifying, from a database, a reference string based on the one or more tokens of the input string, determining a plurality of character index values of the reference string, each character index value indicating a position of a character in the reference string, determining one or more hop index values of the input string, each hop index value indicating a position of a separator in the input string, and calculating a similarity score of the reference string relative to the input string based on the plurality of character index values of the reference string and the one or more hop index values of the input string.

US patent application US 2013/0124525 A1 describes a method of processing received data records, each including one or more values in one or more fields. The values are processed to identify a matched data cluster. The processing includes: for selected data records, generating a query from one or more values; identifying one or more candidate data records from the received data records using the query; determining whether or not the selected data record satisfies a cluster membership criterion for at least one candidate data cluster of one or more existing data clusters containing the candidate records; and selecting the matched data cluster from among one or more candidate data clusters based at least in part on a growth criterion for the candidate data clusters, or initializing the matched data cluster with the selected data record if the selected data record does not satisfy a cluster membership criterion for any of the existing data clusters or based on a result of the growth criterion.

**Summary**

It is an objective of the present invention to provide for an improved computer-implemented access control method and corresponding system as specified in the independent claims. Embodiments of the invention are given in the dependent claims. Embodiments of the present invention can be freely combined with each other if they are not mutually exclusive. In one aspect, the invention relates to a computer-implemented method comprising:

- providing one or more reference strings respectively representing an entity referred to as reference entity;
- tokenizing each of the reference strings into one or more reference tokens;
- capturing an optical pattern by an optical sensor, the optical pattern being presented to the sensor on a document assigned to an entity referred to as requesting entity;
- decoding the optical pattern to obtain a search string representing the requesting entity;
- tokenizing the search string into search tokens;
- creating an extended set of search tokens consisting of a mixture of the search tokens and concatenated search tokens, each concatenated search token being created by concatenating two or more of the search tokens;
- for each of the reference strings, performing, until a match is found or until all reference strings have been traversed:

  • creating an extended set of reference tokens consisting of a mixture of the reference tokens of the reference strings and concatenated reference tokens, each concatenated reference token being created by concatenating two or more of the reference tokens of the reference string;

- creating a set of candidate alignments, each candidate alignment aligning a first alignment partner selected from the extended set of search tokens with a second alignment partner selected from the extended set of reference tokens ;
- computing a candidate-alignment score - CA score - for each of the candidate alignments created for the reference string, the CA score being indicative of the similarity of the first and second alignment partners;
- identifying one or more candidate alignments having the highest CA scores and which - if combined with each other - comprise the largest number of the search tokens but do not comprise any one of the search tokens twice, the identified one or more candidate alignments representing the optimum alignment of the search string and the reference string;
- computing an aggregated CA score from the CA scores of the identified optimum alignment;
- selectively in case the aggregated CA score is above a CA score threshold, computing one or more paired-alignment partner-scores - PAP-scores for each of the candidate alignments in the optimum alignments, each PAP-score being indicative of the similarity of the first and second alignment partners in this candidate alignment;
- computing a prediction score indicating the likelihood of the reference string representing the same entity as the search string as a function of the one or more PAP-scores of all candidate alignments in the optimal alignment;
- if the prediction score is above a prediction threshold, returning the reference string as a match; and

- granting the requesting entity access to an access-controlled resource in dependence on the prediction score computed for the traversed reference strings, the resource being selected from a group comprising a software function, a hardware function, a service, a product, a place and a geographic region.

For example, the tokenization of a (search or reference) string can be performed by splitting the string into tokens on each occurrence of some delimiter. The delimiter can be a character belonging to a predefined set of delimiters, e.g. space character, blind dash, point, comma and/or semicolon. Preferably, the tokenization approach and the corresponding set of delimiters for creating the search tokens and the reference tokens is identical.

In some embodiments, the one or more reference strings is a watchlist consisting of names of non-trustworthy entities. In case a single match is found, the method comprises preventing the requesting entity from accessing the resource. The requesting entity is only allowed to access the resource in case none of the names in the watchlist matches with the search string.

In other embodiments, the one or more reference strings is a whitelist consisting of names of trustworthy entities. The requesting entity is allowed to access the resource only in case the search string matches with a reference string.

Said features may be beneficial, because a very fast, computationally little demanding but at the same time highly accurate access control approach based on optically visible search string in or on a document is provided that may allow evaluating the search string against several million reference strings on a standard computer in real time, i.e., within a few seconds or even within a single second on a standard computer system.

Embodiments of the invention provide a particularly fast and accurate string matching approach, because an optimal token order is identified in a comparatively fast and efficient way which is robust against delimiter-misses or delimiter-recognition-errors during a scanning and/or OCR process: a plurality of candidate alignments respectively consisting of a pair of a first and a second alignment partner are automatically computed. Thereby, one or more search tokens are used to form each of the first binding partners and one or more reference tokens are used to form each of the second binding partners. For example, each one of the search tokens can be used as a respective first alignment partner and each of the reference tokens of the currently processed reference string can be used as a respective second binding partner. In addition, two or more of the search tokens can be automatically concatenated to form further ones of the first binding partners. Likewise, two or more of the reference tokens can be automatically concatenated to form further ones of the second binding partners. Then, all automatically created first and second binding partners can be combined, e.g. based on a random combination algorithm and/or by an algorithm that automatically creates all or a large subset of all combinatorically possible (unique) combinations of first and second binding partners to form the set of candidate alignments. Depending on the number of tokens in the search string and the currently examined reference string, the automatically generated set of first and second alignment partners and the corresponding set of automatically created candidate alignments may be huge.

Embodiments of the invention are both very fast and highly accurate, thereby allowing e.g. for real-time border control of passengers at an airport with a close to zero false positive and false negative error rate, even in case the passengers are checked against global watchlists comprising several 100.000 names.

In a further beneficial aspect, the fact that the PARP score computation is performed only for the optimum alignment and/or the use of additional prefiltering steps helps to scientifically reduce the CPU and memory consumption, thereby allowing an accurate real-time border control and similar applications also with handheld, battery-powered terminals which typically have only limited hardware resources.

According to some embodiments, the token concatenation step for creating the first and/or second alignment partners can comprise concatenating tokens which are not adjacent to each other in the source string (the source string for search tokens is the search string and the source string of reference tokens is the reference string from which the reference token is derived). This allows to get high-scoring (highly similar) alignments with an alignment partner derived from a source string that may lack a particular token. In addition, or alternatively, the token concatenation step for creating the first and/or second alignment partners can comprise concatenating tokens in a token order which is different from the order of the concatenated tokens in the source string. This allows to get high-scoring (highly similar) alignments with an alignment partner derived from a source string that may have a different token order. The automated creation of first and second alignment partners such that two or more tokens are combined, and in particular the concatenation of at least some tokens such that non-adjacent tokens are concatenated and/or such that the order of the concatenated tokens is different from the original order of the concatenated tokens in the source string may ensure that a very sensitive and hence particularly accurate string matching approach is provided, because the matching approach evaluates and covers many spelling variants related to the omission of tokens and/or to related to token order variability. In addition, even if the OCR process missed a delimiter like a "." or a ",", resulting in an erroneously fused token (token-concatenate), the above-mentioned matching method will be able to correctly determine if the search string is comprised in the one or more reference strings or not.

Embodiments of the invention may in addition be particularly fast, because the automated creation of the candidate alignments is computationally cheap: the creation of the first and second alignment partners respectively comprises using some individual (search or reference) tokens directly as an alignment partner and creating further alignment partners by concatenating two or more tokens of the same source string. Then, the set of candidate alignments is automatically created, preferably by creating some or all combinatorically possible (unique) combinations of first and second binding partners. This step does also not involve complex, computationally demanding operations. Then, a CA score is computed for each of the candidate alignments. It is to be noted that each first and second alignment partner in all the candidate alignments represents a single token, because it is either identical to one of the search or reference tokens or it is created by concatenating two or more tokens of the same source string. This greatly facilitates the computation of the CA score for each candidate alignment, because each CA score is computed for a respective pair of individual character sequences (original or concatenation-derived tokens acting as the alignment partners) whereby the created set of candidate alignments inherently covers the variability created by token order and token completeness of the compared strings, so these aspects need not be considered when computing the character sequence similarity of an individual candidate alignment. In addition, the CA computation may be performed merely for identifying an optimal alignment comprising the largest non-redundant number of alignable tokens of the two compared strings. The CA score may hence be only used for quickly identifying the optimal alignment that is then used as basis for computing one or more scores (here: PAP-scores) which is, according to embodiments of the invention, computationally more demanding and which may provide a more exact indication of the similarity of any two paired alignment partners and, if aggregated over the complete optimal alignment, may provide a highly accurate indication of the similarity of the search string and the currently examined reference string.

A further benefit of embodiments of the invention is high processing speed in combination with high accuracy: Lucene's FTS system and also an approach disclosed in WO2008043582 relate to fault tolerant fuzzy searches taking into account an approximate match using an edit distance, e.g. the Levenshtein distance. Moreover, there exist some other, more complex alignment approaches for determining the similarity of two strings or sub-strings. The European patent EP 2 788 897 B1 describes a method and system for performing a fuzzy full text search that provides results in an iterative manner using an inverted token Next Valid Character (NVC) tree to identify documents relevant to entered search tokens. However, edit-distance based algorithms are often computationally quite demanding. For many application scenarios which require fast and at the same time sufficiently accurate (acceptable low number of false positive and false negative search results) processing of complex search strings, existing alignment-based approaches have been observed to be too slow, and sometimes also too inaccurate.

High speed is of particular relevance in the context of document-based access control, e.g. at border controls or at the cashiers desk, in order to avoid the formation of queues.

Hence, according to embodiments of the invention, a document-based access control method is provided that is particularly accurate (low false-negative rate) thanks to the large number of candidate alignments that can be created automatically and that can be used to cover variability in respect to token order and/or token completeness. The text matching method may be particularly fast, because the - computationally typically more demanding - computation of PAP-scores is computed selectively for the candidate alignments contained in the optimal alignment identified for a particular, currently examined pair of a search string and a reference string.

Preferably, the concatenation of tokens for creating the first and/or second alignment partners is performed such that the characters of the concatenated tokens are directly concatenated with each other, i.e., without adding any additional characters like space characters or the like in-between the concatenated tokens.

The majority of examples and embodiments described herein is based on the use of a watchlist, meaning that the requesting entity is only allowed to access the resource if the name of the requesting entity (the search string) does not match with any name on the watchlist (with any reference string). However, other embodiments which are based on whitelists consisting of names of trustworthy entities can likewise be used, whereby in these embodiments, the implications of a match event for obtaining access to the resource are the opposite of what was described with regard to the watchlist concept.

According to some embodiments, the method is used for reading passports and ID cards (ranging from specialized devices to smartphones) e.g. in the context of border control, airplane boarding, airport security checks, etc.. The optical sensor reads the MRZ and/or VIZ lines, provides the read optical data to the terminal and the terminal executes an OCR program or a program for decoding bar-codes (1D&2D) and printed characters (figures, letters). The program for recognizing and/or decoding the characters transforms these data into computer understandable format, e.g. ASCII character strings, and forwards the string as search string to another software module and/or a remote data processing system. The extraction or decoding of the string can be performed within a fraction of a second. Then, the extracted search string is matched by the terminal or a remote server against a watchlist (list of reference strings) containing individuals or organization names. The result of the match is returned. Only in case none of the reference strings matches (sufficiently strong) with the search string, the entity represented by the acquired search string is considered trustworthy and is allowed to access the resource. The watchlist can be, for example, a terrorist watchlist used at customs and border controls and air passenger prescreening. In some embodiments, the access is provided automatically, e.g. by opening or closing a door. In other embodiments, the result of the matching is output to a human to enable the human to grant or deny access to the resource.

According to another example, the resource is a requested monetary transaction to be performed by a bank or a remittance company, casino, insurance company or another institution of a regulated business, in particular regulated businesses which have to comply with "Know Your Customer" (KYC) legal requirements and Anti-Money Laundering (AML) regulations. Depending on the result of the string matching, the requested bank account may e created or denied, and a requested transaction can be performed or aborted.

According to a further example, the document is a medical document, e.g. a medical ensurance ID card which may be used by a doctor to store medical data of a patient in the correct patient health record. Deficiencies in matching patients with multiple database records due to name variations can lead to safety problems. For example, if an OCR error occurs while reading the medical IDd cart of a patient, the system may erroneously create a new account although there already exists an account of this patient. In this case, data duplications and inconsistencies may occur which may even result in the doctor missing relevant medical data such as allergies or drug intolerances.

According to embodiments, the optical sensor is a camera and/or a 2D code reader.

According to embodiments, the optical pattern is an alphanumerical character string, in particular an entity's name. For example, the string can be printed on an identity document, e.g. on the machine-readable-zone, MRZ, of the identity document. Alternatively, the optical pattern can be a bar code or a matrix code.

According to embodiments, the decoding of the optical pattern comprises an optical-character-recognition step (OCR-step), a bar-code-decoding step and/or a matrix-code-decoding step.

According to embodiments, the optical sensor is part of a terminal, wherein the terminal is in particular a border control terminal, an airport security terminal, a check-in terminal for entering a room or a building or a computer system network, a card reading terminal, a point-of-sales terminal, a smartphone, or a portable terminal for ID-document based authentication of an entity.

According to embodiments, the document is a physical document, e.g. a paper-based, metal-based and/or plastic-based object which may have been personalized. For example, the document can be an ID card, a passport, an employee ID card, an insurance card, a credit card, a social security card, or any other document that may be used to prove the identity of an entity.

According to embodiments, the creation of the candidate alignment comprises automatically creating the totality of combinatorically possible, unique pairs of the first and the second alignment partners. This approach may have the advantage that it is ensured that all mathematically possible alignments of any one of the first alignment partners and any one of the second alignment partners is evaluated and a respective CA score is computed. This may ensure that the optimal alignment is really the optimal alignment within all combinatorically possible candidate alignments or candidate alignment combinations.

According to embodiments, the one or more PAP-scores are a plurality of PAP-scores of different PAP-score types. The method further comprises, for each of the reference strings: for each of the plurality of PAP-score types, computing an aggregate PAP-score as a function of all PAP-scores of the said PAP-score type computed for all candidate alignments in the optimal alignment. The prediction whether the reference string represents the same entity as the search string being computed as a function of at least the aggregate PAP-scores.

Computing aggregate PAP-scores for a plurality of different PAP-score types may have the advantage of a significantly increased accuracy of the prediction whether or not the entities represented by the current search string and the currently processed reference string are identical. A PAP-score may indicate, for example, an editing distance, a degree of phonetic, syntactic, semantic and/or other similarity of the first and second alignment partners in a candidate alignment. The larger the number of PAP-score types considered, the better the data basis for predicting, based on the optimal alignment computed for a particular search string and a particular reference string, whether the entities represented by the search string and the reference string are identical. As the plurality of PAP-scores are computed only for the candidate alignments contained in the optimal alignment, the string matching method is nevertheless very fast. The CA scores of the candidate alignments may be computed much faster and with less accuracy, because the CA scores are not used directly as the basis for predicting the similarity or identity of the entity represented by the search string (search entity) and the entity represented by the currently processed reference string (reference entity). The main purpose of computing the CA scores is the identification of the optimal alignment, whereby the optimal alignment is the one of the candidate alignments or a combination of two or more candidate alignments that has/have the highest CA score(s) and comprise(s) the largest number of unique (non-duplicated) search tokens. Hence, the focus of computing the CA scores is the identification of an optimal alignment wherein the original search and reference tokens aligned with each other are as similar as possible in respect to order and completeness of aligned tokens, whereby it should be noted that the border of the candidate alignments in the optimal alignment may or may not be identical to the borders of tokens in the source strings as some original tokens may be concatenated to form an alignment partner. Then, after having identified and optimal alignment based on the CA scores of the candidate alignments, one or more additional and/or alternative similarity scores for the first and second alignment partners of each candidate alignment within the optimal alignment, the so-called PAP-scores, are computed, which is then used as basis for performing the prediction. In some embodiments, the CA-scores of the candidate alignments in the optimal alignment can be re-used as an additional one of the plurality of the PAP-scores, but the CA-scores are preferably not used as the only PAP-scores.

According to embodiments, the method comprises outputting the prediction to a user or to a software module. For example, the result of the prediction can be displayed to a user on a graphical user interface presented on a screen of a server computer or presented on a screen of a client computer interactively coupled over a network with a server computer having performed the prediction. In addition, or alternatively, the result of the prediction can be output to a decision unit, i.e., any software and/or hardware component that is configured to automatically decides to perform a function or action in dependence on whether the prediction indicates identity of the entity represented by the search string and the entity represented by any one of the reference strings. For example, the decision unit can be configured to grant a user access to a security relevant hardware and/or software function, that grants a user access to sensitive data and/or that performs a security critical action, e.g. performs or permits storing data, reading data, opening a gate, closing a gate, performing a monetary transaction, sending an alarm to an authority, or the like.

According to embodiments, the scoring algorithm used for computing the CA score for a candidate alignment of a given length is computationally less demanding than the totality of the one or more scoring algorithms used for computing the one or more PAP-score types for a candidate alignment of the said length.

According to embodiments, the scoring algorithm used for computing the CA score for a candidate alignment of a given length is computationally less demanding than any one of the one or more scoring algorithms used for computing a respective one of the one or more PAP-score types for a candidate alignment of the said length.

For example, the scoring algorithm used for computing the CA score can be a single scoring algorithm that computes a CA-score is a similarity score using an editing distance between the first and the second alignment partner. For example, the editing distance can be the Levenshtein distance. The scoring algorithms used for computing the PAP-scores can be a combination of at least two or more of an editing distance like the Levenshtein distance, a semantic distance and/or a phonetic distance, the particular number and types of scoring algorithms used for computing the CA-scores and/or the PAP-scores may vary depending on the type of entities represented by the surgeon reference strings, depending on the size of the data set/the number of reference strings to be examined, the computational power of the available hardware, the required minimum prediction accuracy and/or the maximum acceptable duration for processing a received search string. However, according to preferred embodiments, the computation of the CA-score for a particular candidate alignment can be performed faster and requires less computational capacities than the computation of all the PAP-scores used as basis for computing the aggregate PAP-scores and for performing the prediction for the said candidate alignment.

According to embodiments, the PAP-scores are of one or more different PAP-score types selected from a group comprising:

- a syntactical similarity score; the syntactical similarity score can be, in particular, an editing distance such as the Levenshtein distance; further examples of a syntactical similarity score are the Jaro-Winkler distance and the Jaccard similarity;
- a phonetic similarity score; an example of a phonetic similarity score is the Soundex; another example is the Metaphone or the Double Metaphone; Soundex is a phonetic algorithm for indexing names by sound, as pronounced in English. The goal is for homophones to be encoded to the same representation so that they can be matched despite minor differences in spelling. The algorithm mainly encodes consonants; a vowel will not be encoded unless it is the first letter. Soundex is the most widely known of all phonetic algorithms and is meanwhile a standard feature of popular database software such as DB2, PostgreSQL, MySQL, Oracle and others. Soundex was developed by Robert C. Russell and Margaret King Odell (Odell, Margaret King (1956). "The profit in records management". Systems. New York. 20: 20). Metaphone is a phonetic algorithm, published by Lawrence Philips in 1990, for indexing words by their English pronunciation (Hanging on the Metaphone, Lawrence Philips. Computer Language, Vol. 7, No. 12 (December), 1990) As with Soundex, similar-sounding words should share the same keys. Metaphone is available as a built-in operator in a number of systems. The original author later produced a new version of the algorithm, which he named Double Metaphone. Contrary to the original algorithm whose application is limited to English only, this version takes into account spelling peculiarities of a number of other languages. The Double Metaphone phonetic encoding algorithm was described in the June 2000 issue of C/C++ Users Journal. It makes a number of fundamental design improvements over the original Metaphone algorithm. It is called "Double" because it can return both a primary and a secondary code for a string; this accounts for some ambiguous cases as well as for multiple variants of surnames with common ancestry. For example, encoding the name "Smith" yields a primary code of SM0 and a secondary code of XMT, while the name "Schmidt" yields a primary code of XMT and a secondary code of SMT-both have XMT in common. Double Metaphone may be used to take into considerations many irregularities in English of Slavic, Germanic, Celtic, Greek, French, Italian, Spanish, Chinese, and other origin. Thus it uses a much more complex ruleset for coding than its predecessor; for example, it tests for approximately 100 different contexts of the use of the letter C alone;

- a character-position-based similarity score; for example, this similarity score can be computed such that the score amount and the degree of similarity expressed by the score depends on the type of character (consonant or vowels or syllables) aligned to each other at particular positions within an alignment; The character-position based similarity score can also be considered as a coarse-grained form of editing-distance based score;

- n-gram-based similarity scores; for example, the computing of this similarity score can comprise comparing hash values of the paired alignment partners, and/or comparing n-gram character count vectors of the paired alignment partners; For example, an n-gram-based similarity score for a string 1 "andrea" and string 2 "andreas", can be computed as follows: each string is represented as a unigram count vector and a bigram count vector. The unigram count vector for string 1 is {a:2, d:1, r:1, e:1, s:0}. The bigram count vector for string 1 is {an:1, nd:1, dr:1, re:1, ea:1, as: 0}. The unigram count vector for string 2 is {a:2, d:1, r:1, e:1, s:1}. The bigram count vector for string 2 is {an:1, nd:1, dr:1, re:1, ea:1, as: 1}. Then, for each string "string 1" and "string 2", the unigram and bigram vectors are combined into a single vector normalized to unit length, and the cosine similarity COS between both unified vectors is computed according to: COS= 1 - ( {2,1,1,1,0,1,1,1,1,0}/10 * {2,1,1,1,1,1,1,1,1,1}/12 ) = 0.9, implying 90% similarity. In addition, or alternatively, the Jaccard similarity JS for these two strings "string 1" and "string 2" can be computed using the unigrams and bigrams of the two strings. The Jaccard similarity JS would be 9/11 = 0.82 since 9 components are common to both strings out of the 11 different components that occur. In addition, or alternatively, all n-gram-based similarity scores are computed for the "dense" string versions (i.e whitespace-removed). This means, for "Andrea Smith" and "Andreas Smyth", n-gram-base similarity scores are calculated for the strings "andreasmith" and "andreassmyth".

- hash-based similarity scores; for example, the computing of this similarity score can comprise comparing hash values of the tokens; for example, a hash-based similarity score can be computed by a hashing function that is based on the most frequent k characters in each string. This function takes an input string and an integer k value and outputs the most frequent k characters from the input string. If the frequencies of two characters are equal, the first occurring character goes first. Hence, for each input string "string 1", "string 2", a sequence of k characters is generated. Then the similarity function calculates the similarity based on characters and their frequencies by checking if the same character appears on both strings, e.g. by computing an edit distance for the two character sequences of length k. E.g. for the strings "andrea" and "andreas", the most frequent k=2 characters according to the described method are "a2n1" and "a2n1", thus this hashing similarity score will yield 100% agreement as both characters occur in both strings with same frequency in this example. omitted characters-based similarity scores; The omission characters-based similarity scores are similarity scores computed as a function of the most common orthographical errors and are therefore language-dependent. E.g. in English, consonants are omitted in the following declining order of frequency: "rstnlchdpgmfbywvzxqkj". The omission similarity score is constructed by first putting the unique consonants in increasing order of omission frequency and appending the unique vowels in order of occurrence. For the string "andrew" this would be "rndwae". Finally on the resulting strings again a syntactical similarity score is computed that is returned as the omitted characters-based similarity scores;

- a semantic similarity score; a semantic similarity score can be computed e.g. based on a synonym dictionary, a physical-object type semantic taxonomy, e.g. gender-specific name lists/gender or ethnicity-specific trained classifiers in the case of the strings/tokens being names of humans; the semantic similarity score can also be computed based on vector representation of words provided by FastText, GloVe, Word2vec; According to embodiments, strings are represented in the form of a vector ("word embeddings") via shallow neural networks that are trained to reconstruct linguistic contexts of words. For example, the program "Word2vec" takes as its input a large corpus of text and produces a vector space, typically of several hundred dimensions, where each unique word in the corpus is assigned a corresponding vector in the space. Word vectors are positioned in the vector space such that words occurring within the same context in the corpus are located close to one another in the space. For example, the strings "car" and "automobile" are syntactically and phonetically highly different, but in a 200-dimensional word embedding based on GloVe the cosine similarity of their two vectors is 75%, which is highly indicative of their similar meaning.

- a language family similarity score indicating language similarity of the candidate alignment partners in an alignment; typically/preferably, the computation of the one or more PAP-scores consuming more computational resources than the computation of a CTA score;

- a combination of two or more of the aforementioned similarity scores. For example, such a combination can comprise computing n-gram-based similarity scores of the Soundex codes of the search and reference strings. In addition, each of the above-mentioned types of similarity scores can be computed on different derivative versions of a pair of strings or tokens. For example, the search and reference strings or the first and second alignment partners can be manipulated first, e.g. by removing all whitespace from the strings, by transforming the strings or alignment partners into a derivative form, e.g. a character sequence described in the hash-based similarity score example, or by inverting the order of characters, or by artificially including a language-specific typo, etc., and then computing the PAP-scores as described above for the pair of derivative strings. Moreover, the PAP-score calculations can be modified for single-letter tokens. This could be of importance in cases where some tokens of the string are abbreviations or initials. E.g. in case of the strings "A Smith" and "Andrew Smith", the tokens "a" and "andrew" have a Jaro-Winkler distance of only 72%. Thus if a single-letter token matches the first character of the aligned partner token, a fixed pre-defined Jaro-Winkler score of 97% is set. In those cases, for all of the other similarity scores described, such a fixed pre-defined score (closer to the perfect-match score) can be set as well. According to some embodiments, the combination can in particular be the mean, min, max and/or quartile of two or more of the aforementioned scores.

Using one or more of the above-mentioned algorithms for computing the PAP-scores may be advantageous, in particular if multiple types of PAP-scores are computed, as a broader and more accurate basis for predicting whether or not the search string and the reference string represent the same entity is provided. The computation of the character-position based similarity score and of the hash-based similarity score can e computationally demanding. Typically, these two similarity scores are not used for computing the CA score. Nevertheless, the CPU consumption is still acceptable also in the context of a real-time system where a search string needs to be compared against many million reference strings within one or two seconds as the PAP-score computation is performed selectively for the candidate alignments that are contained in the optimal alignment. By considering both syntactic, phonetic and preferably one or more further similarity scores computed as PAP-scores, the accuracy of the prediction may be increased. The applicant has observed that errors occurring during the reading process and spelling variants that result in the mismatch of one or more individual characters and that hence increase the syntactical distance should not be considered as an indicator of the search entity and the reference entity being different entities in particular in case the syntactic dissimilarity is accompanied with a phonetic dissimilarity. For example, the applicant has observed that often for individual parts of entity names several synonyms exist which have a slightly different character sequence but have a similar or almost identical phonetical pattern. In this case, computing phonetic PAP-scores in combination with syntactic PAP-scores may allow a prediction algorithm, e.g. a machine learning algorithm like a neuronal network, to learn to predict based on a combination of PAP-scores of two or more different PAP-score types, to predict whether or not the search entity and the reference entity are identical.

According to embodiments, the computer-implemented method further comprises, for each of the reference strings, identifying the one of the candidate alignments in the optimal alignment having the lowest PAP-score (referred herein as the "worst-match candidate alignment" within the optimal alignment string). The prediction whether a particular one of the reference strings represents the same entity as the search string is computed as a function of at least the identified lowest PAP-score of the optimal alignment computed for this particular reference string.

This may be advantageous as the applicant has observed that the "worst match" candidate alignment and the one or more PAP-scores computed for said "worst match" candidate alignment are highly predictive of the overall similarity of the search string and the reference string and of the question if the search entity and the reference entity are identical.

For example, taking into account the "worst match" candidate alignment and its respective PAP-score(s) for performing the prediction can comprise predicting that the reference entity and the search entity are not identical if one of the one or more PAP-scores computed for the "worst match" candidate alignment is below a minimum PAP-score threshold value. According to one example, taking into account the "worst match" candidate alignment and its respective PAP-score(s) for performing the prediction can comprise predicting that the reference entity and the search entity are not identical if a sum, mean or average value of two or more normalized PAP-scores computed for the "worst match" candidate alignment is below a minimum "normalized and combined" PAP-score threshold value.

According to embodiments, the method further comprises a prefilter-matching sub-method. The prefilter-matching sub-method comprises:

- identifying at least one name typology for the search string and for each of the reference strings, the typology being selected from a group comprising: language, country and gender; and
- normalizing the search string and each of the reference strings based on the at least one respectively identified name typology.

For each of the normalized reference strings, the sub-method comprises:

- computing a prefilter score, PF-score, as a function of an alignment of the normalized search string with the normalized reference string;
- in case the PF score is below a typology-specific rejection threshold, treating the reference string as a non-matching string and skipping the steps of computing candidate-alignments, CA-scores and PAP scores;
- in case the prefilter score is above a typology-specific acceptance threshold, treating the reference string as a matching string and skipping the steps of computing candidate-alignments, CA-scores and PAP scores;
- in case the prefilter score is above a rejection threshold and below the acceptance threshold, performing the steps of computing candidate-alignments, CA-scores and PAP scores for determining if the search string matches the reference string.

These features will tremendously increase performance, because the pre-filter matching acts as a coarse-grained, string-based initial matching procedure which can be performed much faster than the matching based on the expanded token sets and the token-based alignments and the computation of the CA scores and the PAP scores. If already during this pre-filter step a very high matching score (pre-filter score) is obtained, the token-based matching which is computationally much more demanding can be skipped as it is already clear from the prefilter score that a match was found. Likewise, if the prefilter score is very low, the token-based alignment and matching can be skipped as it is already clear from the prefilter score that the reference string and the search string do not match. Only in case the prefilter score is in-between these two thresholds, the token-based alignments and CA/PAP-score computations are performed.

According to embodiments, the prediction is performed by a trained machine-learning program. The machine learning program can be, for example, a neural network, a support vector machine, a decision tree, a random forests, extremely randomized trees, a gradient boosting classifier, a k-nearest neighbor classifier, or similar algorithms, or a combination of these. The combination of two or more of these machine learning programs can be performed e.g. by averaging, majority voting, stacking, or similar methods.

The training is performed on a training data set comprising search strings and reference strings annotated with an identifier of the entity represented by the respective string. The training data set further comprises, for each of the reference strings, an optimal alignment and the one or more PAP-scores computed for the candidate alignments in the optimal alignment. The optimal alignment and the PAP-scores of the training data set are of the training data set are computed as described herein for embodiments of the invention. Hence, the machine learning program learns, during the training phase based on the training data set, the predictive power of individual PAP-score types for predicting identity or non-identity of entities represented by a search string and a reference string. For example, the training may comprise iterative modifying a predictive model of the machine learning program such that a loss function is minimized, wherein the loss function computes a difference of a prediction if entities represented by a search string and a reference string contained in the trainings data set with the actual, known and annotated identity (or non-identity) of those entities.

Using a machine learning algorithm may be advantageous as the applicant has observed that in different languages and different technical domains and respective entity types, the predictive power of different types of PAP-scores may vary. Machine learning programs like neural network, e.g. fully convolutional neuronal networks, have been observed do be able to flexibly learn to identify the most relevant PAP-score types for predicting identity of search and reference entity in a highly accurate manner.

According to embodiments, the method further comprising:

- for each of the reference strings, computing the totality of n-grams contained in at least one of the reference tokens in the reference string; and storing the n-grams as index keys with a reference to the reference string in a searchable index, the index comprising the n-grams and additional data to be evaluated for CA score and/or PAP score; for example, the additional data can comprise patterns for performing a rule based CA and/or PAP score computation; for example, the pattern can comprise a regular expression to match the first letter of each token and a scoring factor to be used to compute a score for a matching token;

- computing the totality of n-grams contained in each of the search tokens in the search string;
- using at least one of the n-grams of the search string as search key value for searching the index for identifying a sub-set of the reference strings in the database, the reference strings in the subset comprising at least one n-gram that is identical with an n-gram created from the search string;
- wherein the creation of the candidate alignments, the computing of the CA score, the creation of the optimal alignment, the computing of the PAP-scores and the prediction is performed selectively for reference strings contained in the subset of reference strings.

This may be advantageous as the number of reference strings to be processed is significantly reduced, thereby increasing performance.

For example, computing of the totality of n-grams contained in at least one of the reference tokens in the reference string can be implemented such that only a particular reference token, e.g. only the first name, or only the last name, is used as a basis for computing the n-grams to be stored in the index. This may have the advantage that the index is smaller and the search speed may be increased. According to other embodiments, the computing of the totality of n-grams contained in at least one of the reference tokens in the reference string can be implemented such that all n-grams of all reference tokens of the reference string is used as a basis for computing the n-grams of a reference string to be stored in the index.

According to embodiments, at least two different n-gram based indices are created from the reference strings (e.g. as described above). For example, a bi-gram based index and a tri-gram based index can be created. For each received search string, the totality of n-grams of the said two n-gram types is computed, e.g. the totality of bi-grams and the totality of tri-grams. Then, a filtering operation is performed that takes into account at least two filtering criteria: the first filtering criterion is that the search string and the reference string share at least one common bi-gram. This can be determined by searching each of the bigrams derived from the search string in the bi-gram based index for obtaining a first sub-set of reference strings or their respective identifiers. The second filtering criterion is that the search string and the reference string share at least one common tri-gram. This can be determined by searching each of the tri-grams derived from the search string in the tri-gram based index for obtaining a second sub-set of reference strings or their respective identifiers. By performing an INTERSECT or INNER JOIN operation on the first and second subset, a subset of reference strings is obtained for further processing that is of significantly limited size. The index search and the INTERSECT and INNER JOIN operations can be performed very quickly.

According to further embodiments, an alternative filtering operation is performed that uses at least one n-gram based index of the reference strings and that takes into account at least two filtering criteria that are tested sequentially: the first filtering criterion is that the search string and the reference string share at least one common n-gram. This can be determined by searching each of the n-grams derived from the search string in the n-gram based index for obtaining a sub-set of reference strings. The second filtering criterion is that the search string and the reference string obtained in the said subset of reference strings have an edit distance that is smaller than a predefined threshold. This can be determined by computing the edit distance for the search string and each of the reference strings in the said subset fulfilling the first criterion. The computation of edit distances can typically be performed very quickly.

According to embodiments, all reference and search strings of the training data set are specified in a single language. In order to support searching for search strings of multiple different language, for each of the languages to be supported, a respective training data set is created selectively comprising annotated search and reference strings in this language. In order to perform a fuzzy text match of a search string of a particular language in one or more reference strings in the same language, the one of the trained machine learning programs is used for performing the prediction that was trained on the said language. Training the machine learning software on a training set of a single language may have the advantage that the trained machine learning logic has an even higher accuracy. The applicant has observed that the different types of (aggregated) PAP-scores may have different predictive power in different languages such as English, Spanish, French, German or Chinese. In order to allow a fast string matching of search strings of many different languages, multiple different machine learning programs are provided having been trained on a respective, language-specific training data set. The string matching method may comprise a step of automatically determining the language of the received search string in response to receiving the search string, identifying the one out of a plurality of trained machine learning programs having been trained to predict entity identity based on a training set of the identified language, and using the identified trained machine learning software for performing the prediction whether or not the search entity and the reference entity are identical.

According to embodiments, the method comprises, for each of the reference strings, determining an alignment element number; and performing the combination of the two or more identified candidate alignments into the optimal alignment such that the number of candidate alignments in the optimal alignment is identical to the determined alignment element number.

For example, the determined alignment element number may be "3". In this case, the step of identifying one or more candidate alignments comprises identifying one or more candidate alignments having the highest CA scores and which - if combined with each other - comprise the largest number of the search tokens but do not comprise any one of the search tokens twice and which in addition fulfil the criterion that the number of candidate alignments of the optimal alignments is identical to the alignment element number, e.g. "3".

This may be beneficial as this feature may ensure that the optimal alignment is compact and comprises as few candidate alignments as possible while still covering many or all tokens contained in the search string. This may also increase performance, because the PAP-scores are computed for each of the candidate alignments in the optimal alignment, so the reduction of candidate alignments in the optimal alignment may also reduce the number of PAP-scores to be computed and may reduce the computational costs associated with PAP-score computation.

According to embodiments, the determination of the alignment element number comprises determining the minimum of the number of reference tokens and the number of search tokens; and using the determined minimum as the alignment element number.

For example, the search string "Andrea Smith Lee" may consist of three search tokens and the currently processed reference string "Andreas Leesmith" may consist of two reference tokens.

A possible combination "PC1" of 3 candidate alignments could be:

$$(\text{Andrea}\,|\,\text{Andreas}) + (\text{Lee}\,|\,\text{Leesmith}) + (\text{Smith}\,|\,\text{Leesmith}).$$

A possible combination "PC2" of 2 candidate alignments could be:

$$(\text{Andrea}\,|\,\text{Andreas}) + (\text{LeeSmith}\,|\,\text{Leesmith}).$$

The minimum of "3" search tokens and "2" reference tokens is the number "2". Hence, "2" would be the dynamically determined alignment element number in this example.

While both PC1 and PC2 would fulfill the criterion of comprising the largest number of the search tokens possible and not comprising any one of the search tokens twice, only PC2 fulfils the criterion that the number of candidate alignments in the optimal alignments is identical to the alignment element number "2". Hence, PC2 would be selected as the optimal alignment (assuming in this example fur illustration purposes that the sum of the CA-Scores of the candidate alignments in PC1 and PC2 is identical which is not the case for most edit-distance based CA-scoring approaches).

According to embodiments, the creation of the extended set of search tokens comprises:

- automatically creating the totality of combinatorically possible combinations of two or more of the search tokens; and
- concatenating each of the created combinations to form a one of the concatenated search tokens used as one of the first alignment partners; and/or

According to embodiments, the creation of the extended set of reference tokens comprises:

- automatically creating the totality of combinatorically possible combinations of two or more of the reference tokens;
- concatenating each of the created combinations to form one of the con-catenated reference tokens used as one of the second alignment partners.

The creation of the extended set of search tokens and/or reference tokens is performed fully automatically.

The method can further comprise automatically aligning each of the crated first alignment partners with one or more of the second alignment partners, thereby respectively creating one of the candidate alignments of the set of candidate alignments.

For example, the concatenation of two or more of the search tokens can be performed in accordance with their original order and preferably also in an order deviant from their original order in the search string. In addition, or alternatively, the search token concatenation is performed such that at least some of the search tokens adjacent to each other in the search string are concatenated, and preferably the search token concatenation is performed such that also some of the search tokens not having been located adjacent to each other in the search string are concatenated to form one of the first alignment partners.

The automated creation of at least some of the first alignment partners by concatenating two or more search tokens may be advantageous as this leads to an automated expansion of the originally provided search string and respective search tokens into a large set of new "virtual" search tokens that can be used as first alignment partners but that have not been contained in the actual search string (which means that these "virtual/artificial" search tokens have not been created in the tokenization step because the search string did not comprise an appropriate delimiter. This implies that at least some of the first alignment partners represent "virtual/artificially created" search tokens which do not occur in the original search string. The larger the number of "virtual/artificial search tokens", the higher the number of first alignment partners created, and the higher the number of candidate alignments that can be formed. The higher the number of candidate alignments, the higher the number of variants of parts of the search string that may be considered in the string matching and the higher the sensitivity of the string matching approach.

According to embodiments, the method further comprises, for each of the reference strings, automatically creating a set of second alignment partners from the reference tokens of the reference string. The creation comprises automatically creating a plurality of combinatorically possible combinations of two or more of the reference tokens; and concatenating each of the created combinations to form a concatenated reference token used as one of the second alignment partners.

For example, the concatenation of two or more of the reference tokens can be performed in accordance with their original order and preferably also in an order deviant from their original order in the reference string. In addition, or alternatively, the reference token concatenation is performed such that at least some of the reference tokens adjacent to each other in the reference string are concatenated, and preferably the reference token concatenation is performed such that also some of the reference tokens not having been located adjacent to each other in the reference string are concatenated to form one of the second alignment partners.

The automated creation of at least some of the second alignment partners by concatenating two or more reference tokens may be advantageous as this leads to an automated expansion of the originally provided reference string and respective reference tokens into a large set of new "virtual" reference tokens that can be used as second alignment partners but that have not been contained in the actual reference string (which means that these "virtual/artificial" reference tokens have not been created in the tokenization step because the reference string did not comprise an appropriate delimiter. This implies that at least some of the second alignment partners represent "virtual/artificially created" reference tokens which do not occur in the original reference string. The larger the number of "virtual/artificial reference tokens", the higher the number of second alignment partners created, and the higher the number of candidate alignments that can be formed. The higher the number of candidate alignments, the higher the number of variants of parts of the reference string that may be considered in the string matching and the higher the sensitivity of the string matching approach.

After having finished creating the first and second alignment partners from the search tokens and the reference tokens of the currently processed reference string, the method further comprises automatically aligning each of the crated second alignment partners with one or more first alignment partners, thereby respectively creating one of the candidate alignments.

According to embodiments, the automated creation of the plurality of combinatorically possible combinations of two or more of the search or reference tokens is performed such that the original order of the tokens in the respective string has no impact on token combination. In other words, one or more of the (first and/or second) alignment partners are created by concatenating (search or reference) tokens in accordance with the original order of said tokens in their respective source string and one or more other ones of the (first and/or second) alignment partners are created by concatenating (search or reference) tokens in a different order than the original order of said tokens in their respective source string.

This means that according to some embodiments, one or more of the first alignment partners will consist of two or more search tokens having been concatenated in an order that differs from the original order of the search tokens in the search string. Likewise, one or more of the second alignment partners will consist of two or more reference tokens having been concatenated in an order that differs from the original order of the reference tokens in the currently processed reference string.

This may be advantageous as this feature may ensure that the string matching approach according to embodiments of the invention may identify strings representing the same entity even though the order of the tokens in the matched search and reference string may not be identical.

This aspect may be particularly advantageous in application scenarios where a false negative result is highly undesired.

For example, the reference strings can be a "watchlist" comprising entity names of entities considered as non-trustworthy, dangerous and/or even criminal. The search string may represent the name of an entity currently requesting to perform a security relevant action ("referred to as requesting entity"). For example, the security relevant action can be the permission to access a country, building or geographic region, the automated transfer of money to a bank account to entity, the granting of read and/or write access to sensitive (e.g. medical or police) data, the granting of access to a machine or software such that the entity is allowed to trigger an action or function of this machine or software (e.g. a medical device, a vehicle, a weapon, a machine comprising or processing dangerous substances, etc.). In these application scenarios, a false negative result is highly undesired: if the name of this entity is erroneously not identified as being mentioned in the above mentioned "watchlist" e.g. because of a deviant order of name parts like first name and surname in the search string and the respective reference string in the " watchlist", this would result in allowing a non-trustworthy entity to perform the requested security relevant action. This may pose a threat to the safety of individuals or the community. Hence, in security-related application scenarios where the reference strings represent names of entities on a "watchlist" of non-trustworthy entities, creating alignment partners by combining tokens in a different order than the order of token in their respective source string may be highly advantageous as variations in the order of complex name parts have been observed to often cause false negative results in prior art systems.

According to embodiments, the automated creation of the plurality of combinatorically possible combinations of two or more of the search or reference tokens being performed such that only tokens lying adjacent to each other in the respective string are combined.

This may be advantageous as this feature may ensure that the string matching approach according to embodiments of the invention may identify strings representing the same entity even though the search string may lack some tokens and/or delimiters comprised in the search string and vice versa. For example, sometimes some name parts are considered optional or less relevant and are omitted by some authors or users. If e.g. the search token does not mention a middle name, or a title, or a prefix or suffix in any other type of complex string used as search string, while the currently processed reference string comprises this omitted middle name, title, prefix or suffix, the concatenation of non-adjacent tokens may result in the creation of "virtual/artificial" search or reference tokens that align very well to respective parts of the respectively other string. This aspect may be particularly advantageous in the above-mentioned application scenarios where a false negative result is highly undesired.

According to embodiments, the automated creation of the plurality of combinatorically possible combinations of the two or more of the search tokens is performed such that the maximum number of the search tokens combined to form a concatenated search token is below 4, preferably below 3 of the search tokens.

In addition, or alternatively, the automated creation of the plurality of combinatorically possible combinations of the two or more of the reference tokens is performed such that the maximum number of the reference tokens combined to form a concatenated reference token is below 4, preferably below 3 of the reference tokens.

These embodiments may be advantageous as the applicant has observed that the reduction of the number of first and second binding partners caused by limiting the number of tokens that are concatenated to form an alignment partner may significantly reduce the number of candidate alignment and reduce CPU consumption without significantly reducing accuracy. This is because the information conveyed in large alignment partners created by concatenating three or even more tokens can also be represented by a small set of smaller alignment partners created by concatenating only two of said tokens.

According to embodiments, the automated creation of the plurality of combinatorically possible combinations of the two or more of the search tokens being performed such that all combinatorically possible combinations of the two or more of the search tokens are created.

For example, the algorithm for creating the first alignment partners can comprise for a search string SSTR having n search tokens, n being an integer larger than 1:

1. use each of the n search tokens as a respective first alignment partner

2. create all unique "artificial search tokens" that can be created by concatenating x of the search tokens into a respective first alignment partner, whereby x=2; thereby, constraints regarding the concatenation of tokens in respect to their order and distance from each other may apply;

3. increase x by 1;

4. if x = n, terminate;

5. else continue with 2.

According to embodiments, the automated creation of the plurality of combinatorically possible combinations of the two or more of the reference tokens being performed such that all combinatorically possible combinations of the two or more of the reference tokens are created.

For example, the algorithm for creating the second alignment partners can comprise for a reference string RSTR having m reference tokens, m being an integer larger than 1:

1. use each of the m reference tokens as a respective second alignment partner

2. create all unique "artificial reference tokens" that can be created by concatenating x of the reference tokens into a respective second alignment partner, whereby x=2; thereby, constraints regarding the concatenation of tokens in respect to their order and distance from each other may apply;

3. increase x by 1;

4. if x = m, terminate;

5. else continue with 2.

According to embodiments, the automated creation of the set of candidate alignments comprises creating all combinatorically possible combinations of the first alignment partners and the second alignment partners.

According to embodiments, the CA score is selected from a group comprising:

- a syntactical similarity score, e.g. an editing distance like the Levensthein distance, or the Jaro-Winkler distance or the Jaccard similarity;
- a phonetic similarity score, e.g. Soundex; Double Metaphone;
- n-gram-based similarity scores; for example, the computing of this similarity score can comprise comparing hash values of the paired alignment partners, and/or comparing n-gram character count vectors of the paired alignment partners (see examples provided in respect to the PAP-score computation in p. 15-17);
- a combination of two or more of the aforementioned similarity scores. the combination can in particular be the mean, min, max and/or quartile of two or more of the aforementioned token-based combination algorithms.

According to embodiments, the method is implemented in a server application running on a server computer. The search string is comprised in a search request received by the server application from a client computer via a network, e.g. the Internet. The method further comprises returning the prediction to the client computer via the network in response to the receiving of the request.

According to embodiments, the method is implemented in a terminal being operatively coupled with the optical sensor.

In addition, or alternatively, the method is implemented in a client-server architecture wherein the client application is instantiated in the terminal and the server application is instantiated on a server computer connected to the terminal via a network. The client application is configured for obtaining the search string and sending the search string to the server application, wherein the server application is configured to perform the creation and alignment of the alignment partners, the CA scores, PAP scores and the prediction score and to return the result whether or not at least one matching reference string was found for the search string and wherein the client application is configured to grant or deny access.

According to embodiments, the method is a real-time method configured for granting or denying access in real time.

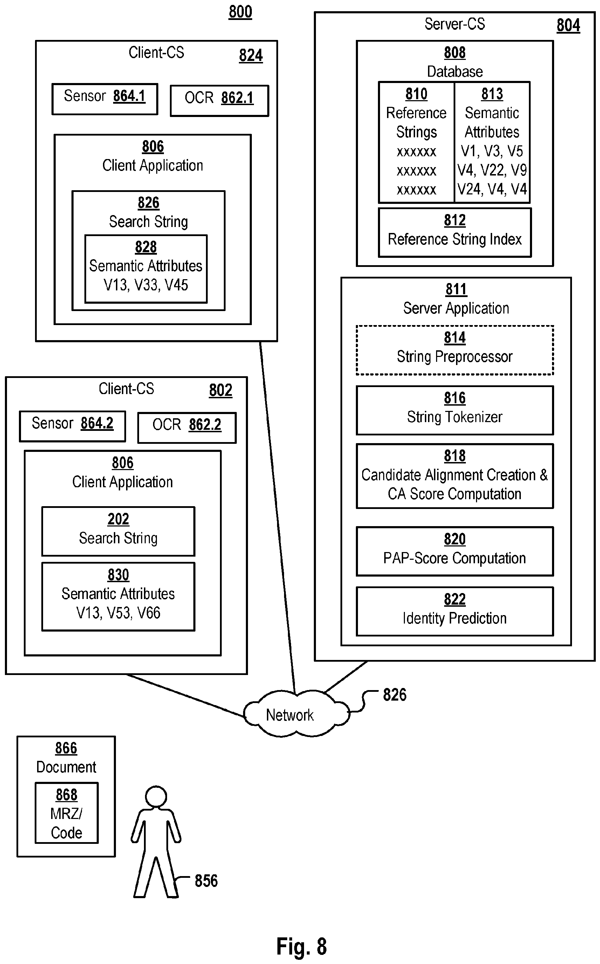

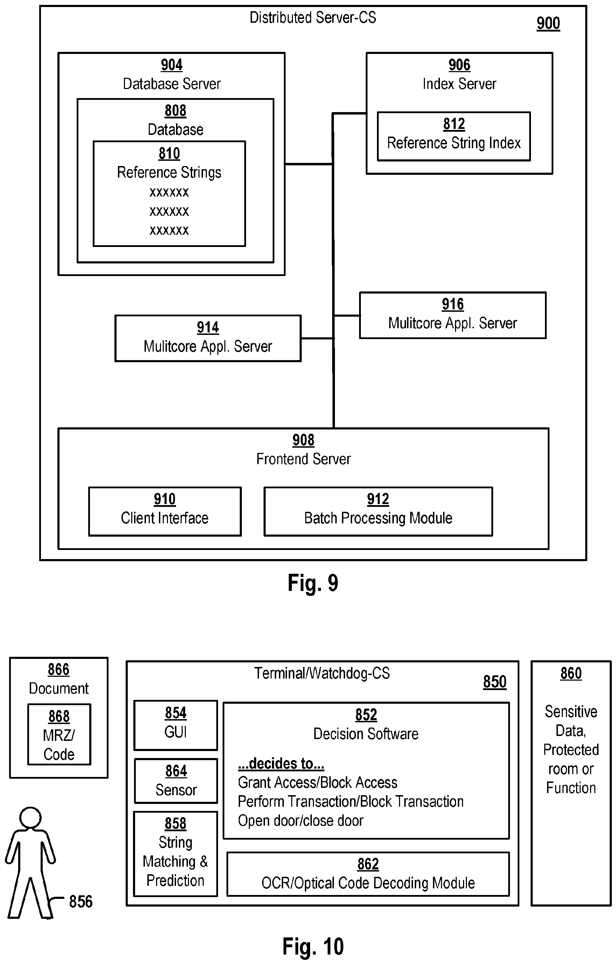

Using the fast string matching method for a real-time application may be advantageous as the step-wise computation of the CA-scores and the PAP-scores as described for embodiments of the invention may allow matching one or more search strings against a huge corpus of reference strings with almost now delay. Hence, the method can be used in application scenarios where immediate response is key, e.g. when a particular request for performing a hardware or software function, a request for accessing some data, a request for entering a building or room, or a request for performing a monetary transaction needs to be processed and the name of the user or organization having submitted the request needs to be checked against a watchlist of entity names considered to be non-trustworthy. In all these scenarios, the string matching needs to be fast in order to avoid long wait times of a user and to avoid that the checking step becomes a bottleneck operation in the respective workflow. A more detailed description of some examples of these application scenarios are provided in the figure description of figures 8 and 9.

Other application scenarios where real-time capabilities can be of high value comprise the use of the string matching method according to embodiments of the invention for searching long complex entity names, e.g. person names, in a database. In these application scenarios, the user expects to receive a real time response.

In addition, or alternatively, the method is performed repeatedly and fully automatically, e.g. in response to a trigger signal of a sceduler, for repeatedly verifying if the requesting entity should be allowed to access the resource. For example, the one or more reference strings can be updated dynamically and the automated repeating of token alignment and score computation as described herein for embodiments of the invention may ensure that the permission to access the resource is withdrawn proptly after the name of the requesting entity has been added to a watchlist or removed from a whitelist.

According a further embodiment, the method is used for identifying complex names in text documents, e.g. spreadsheet documents, office documents and/or scanned documents having been processed by an optical character recognition (OCR) technique to identify text contained in the digital document generated from the scanned, paper-based document. The method comprises identifying names of one or more entity types, e.g. persons, and using the extracted substance names as of the one or more reference strings to be matched against one or more search strings. For example, the extracted one or more reference strings can be stored temporarily in the memory of a computer system or permanently, e.g. as an integral part of the electronic document obtained during the OCR and name identification step.

In a further aspect, the invention relates to a computer readable medium comprising instructions that when executed by a processor causes the processor to execute a method according to any one of the above embodiments.

In a further aspect, the invention relates to an access control system comprising:

- a volatile or non-volatile data store comprising one or more reference strings, each reference string representing an entity referred to as reference entity;
- an optical sensor configured to capture an optical pattern presented to the sensor on a document assigned to an entity referred to as requesting entity;
- a distributed or monolithic data processing system configured for:

  • decoding the optical pattern to obtain a search string representing the requesting entity;
  • tokenizing the search string into search tokens;
  • creating an extended set of search tokens consisting of a mixture of the search tokens and concatenated search tokens, each concatenated search token being created by concatenating two or more of the search tokens;
  • for each of the reference strings, performing, until a match is found or all reference strings have been traversed:

    ◦ creating an extended set of reference tokens consisting of a mixture of the reference tokens of the reference strings and concatenated reference tokens, each concatenated reference token being created by concatenating two or more of the reference tokens of the reference string;
    ◦ creating a set of candidate alignments, each candidate alignment aligning a first alignment partner selected from the extended set of search tokens with a second alignment partner selected from the extended set of reference tokens;
    ◦ computing a candidate-alignment score - CA score - for each of the candidate alignments created for the reference string, the CA score being indicative of the similarity of the first and second alignment partners;
    ◦ identifying one or more candidate alignments having the highest CA scores and which - if combined with each other - comprise the largest number of the search tokens but do not comprise any one of the search tokens twice, the identified one or more candidate alignments representing the optimum alignment of the search string and the reference string;
    ◦ computing an aggregated CA score from the CA scores of the identified optimum alignment; selectively in case the aggregated CA score is above a CA score threshold, computing one or more paired-alignment partner-scores - PAP-scores for each of the candidate alignments in the optimum alignments, each PAP-score being indicative of the similarity of the first and second alignment partners in this candidate alignment;
    ◦ computing a prediction score indicating the likelihood of the reference string representing the same entity as the search string as a function of the one or more PAP-scores of all candidate alignments in the optimal alignment;
    ◦ if the prediction score is above a prediction threshold, returning the reference string as a match; and

- selectively in case the prediction score obtained for all reference strings is above or below a prediction threshold, granting the requesting entity access to an access-controlled resource, the resource being selected from a group comprising a software function, a hardware function, a service, a product, a place and a geographic region.

A "string" as used herein is a character sequence, e.g. a character sequence of Unicode characters or of characters belonging to any other code table. In particular, the character sequence can be an alphanumeric character sequence. The character sequence may or may not comprise characters used as delimiters in a tokenization process. The string can be stored in any data type adapted to store a sequence of elements using some character encoding, e.g. an array of bytes.

A "string matching" method as used herein is a data processing method that comprises computationally determining the similarity of two strings or derivatives thereof. (e.g. sub-strings, in particular tokens created by tokenizing the string and/or concatenating some of the tokens of the string). For example, two strings can be considered to "match" if one or more similarity scores (computed e.g. as inverse distance scores) are above a predefined threshold.

An "alignment" of character sequences acting as alignment partners as used herein is an arrangement of two character sequences that is used as basis for computing a similarity score (alignment score), e.g. in the form of a CA-score and/or in the form of a PAP-score. According to some embodiments, aligning a first and a second character sequence (e.g. first and second alignment partners) simply means aligning the first character position of the first character sequence with the first character position of the second character sequence and then aligning all subsequent character positions without any gaps. According to other, more complex alignment algorithm, the alignment of the two character sequences (alignment partners) may be more complex, e.g. may be performed such that gaps are allowed.

A "CA-score" as used herein is a numerical value being indicative of the similarity of a first and a second character sequence also referred to as "alignment partner". According to preferred embodiments, the CA-score is computed as a single edit distance score or as a single phonetic distance score or as a similarity score derived from less than four edit distance or phonetic similarity scores.

A **"PAP-score"** as used herein is a numerical value being indicative of the similarity of the first and second alignment partners in a candidate alignment contained in the optimal alignment of a search string and a particular reference string. According to embodiments, the computation of the one or more PAP-scores per candidate alignment is computationally more demanding than the computation of the one or more CA-score of the said candidate alignment. For example, the one or more PAP-scores computed for each candidate alignment in an optimal alignment can comprise at least one semantic similarity score that is indicative of the semantic similarity of an entity or entity attribute represented by the first and second alignment partners of the said candidate alignment.

An **"aggregate" PAP-score** is a numerical value computed by applying an aggregate function all PAP-scores of the same PAP-score type having been computed for the one or more candidate aliments in an optimal alignment.

A **"candidate alignment"** as used herein is an alignment of a first and a second character sequence referred herein as "first and second alignment partners". The first alignment partner can be a search token created by tokenizing the search string or a concatenation of two or more of the search tokens in accordance with or in deviation of the original order of the search tokens. The second alignment partner can be a reference token created by tokenizing the reference string or a concatenation of two or more of the reference tokens in accordance with or in deviation of the original order of the reference tokens. Preferably, a set of candidate alignments is created fully automatically and comprises at least some candidate alignments comprising a first and/or second alignment partner having been created by concatenating two or more search tokens (second alignment partner: two or more reference tokens) in deviation of the original order of the said search tokens (second alignment partner: reference tokens) in the search string (second alignment partner: reference string).

A **"real time"** method and corresponding system as used herein is a computer-implemented method and corresponding hardware and/or software system subject to a "real-time constraint", for example from event to system response. Real-time programs must guarantee response within specified time constraints, often referred to as "deadlines". The correctness of these types of systems depends on their temporal aspects as well as their functional aspects. Real-time responses are often understood to be in the order of a few seconds, e.g. less than two seconds, and often less than milliseconds, and sometimes microseconds. A system not specified as operating in real time cannot usually guarantee a response within any timeframe, although typical or expected response times may be given.

A **"terminal"** as used herein is a stationary or portable data processing device that comprises an interface for receiving and/or outputting data. Often, a terminal represents an endpoint of a communication network. For example, a terminal can be a stationary device used e.g. at airports and/or border controls which comprises an optical sensor and optionally a holder or a feeder for correctly positioning a document such as a passport relative to the optical sensor. In some embodiments, a smartphone can be used as terminal.

An **"entity"** as used herein is ontological concept existing in the physical world, e.g. as a "physical object" existing in the analog world and/or as a digital representation thereof in an electronic data processing system. For example, an entity can be a natural or legal person (e.g. an organization, in particular a company), a machine, a vehicle, a vessel, or a digital representative thereof (e.g. a "user" or "user group").

## Brief description of the drawings

In the following embodiments of the invention are explained in greater detail, by way of example only, making reference to the drawings in which:

Figure 1    is a flowchart of a method for efficient string matching;
Figure 2    depicts a set of candidate alignments according to one embodiment;
Figure 3    depicts a set of candidate alignments according to another embodiment;
Figure 4    depicts an optimal alignment derived from the candidate alignment set depicted in figure 2;
Figure 5    depicts an optimal alignment derived from the candidate alignment set depicted in figure 3;
Figure 6    depicts the computation of PAP-scores of three different types for each candidate alignment in an optimal alignment;
Figure 7    depicts the computation of an aggregate PAP-score from all PAP-scores of the optimal alignment for each of three different PAP-score types;
Figure 8    depicts a distributed computer system for real-time string matching implemented as client-server architecture;
Figure 9    depicts an example implementation of the server in the form of a cloud service architecture; and

Figure 10    depicts a watchdog computer system for protecting a sensitive object or functionality.

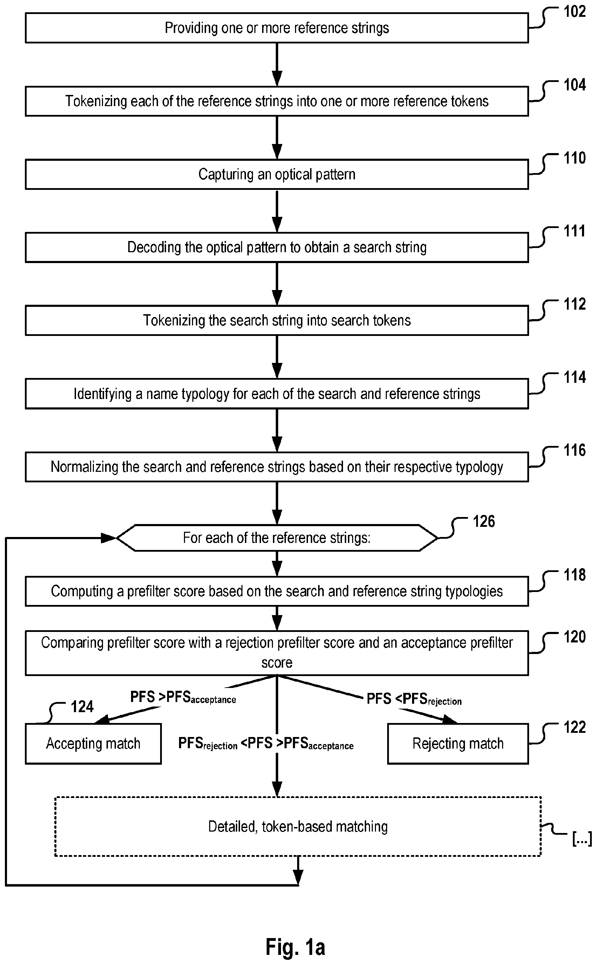

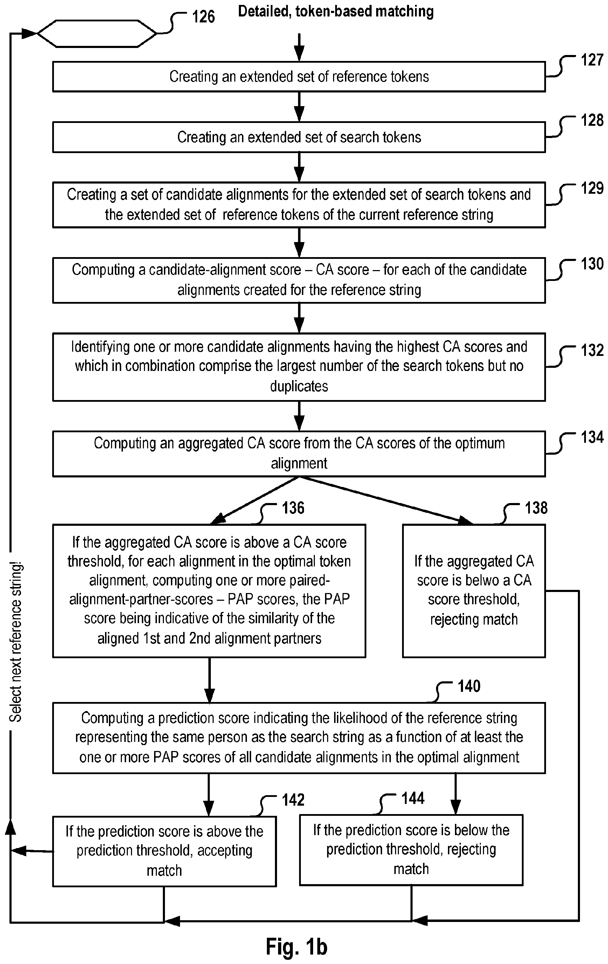

**Figure 1** a flowchart of a method for efficient string matching according to one embodiment of the invention. The method can be used in a broad application scenario, in particular in application scenarios where real-time responses are required.

According to one example, the method can be used to fight against money laundering and terror financing. In the following, examples of the method will be described using search and reference strings that are person names and represent natural persons. Of course, the method can likewise be applied on the names of other types of entities.

The method can be implemented, for example, in a stand-alone border control terminal or in a distributed system comprising a terminal with a client application and a remote server computer comprising a server application which is interoperable with the client application over a network.

The border control shall ensure that any person whose name is comprised in a list of known terrorists ("watchlist") is prevented from entering a country.

There are several aspects that increase the difficulty of this tasks. When a person trying to pass the border control presents his or her passport or ID-to the optical reader of a terminal, reading errors may occur: the MRZ, VIZ or the lenses of the sensor may be covered with dirt; the imprint may be damaged, e.g. scratched, faded or rubbed off. The MRZ may be too short to comprise the complete name of a person, so the name comprised in the MRZ or other areas of the document may not represent the full name of a person. In addition the names in the watchlist (the one or more reference strings) feature inaccuracies such as typos, spelling variants, left-out parts, and often are in non-standardized formats. Furthermore, there are no globally accepted rules for transcription from words written using Chinese, Cyrillic, Arabic, Taiwanese etc. characters. For example, someone with British, Chinese and Egyptian heritage might have their name written "Mohammed Lee-Smith", "Li-Smyth, Muhamet", "Mohammed Leesmith", etc. Searching for company names can be even harder as there is often even less standardization. Thus, an effective watchlist screening technology must be able to handle this fuzziness when comparing names, because there are two types of errors that can occur. First, a false-positive error is when the screening technology incorrectly classifies a name of an entity as matching a name on the watchlist. Second, a false-negative error is when the screening technology incorrectly classifies a name as not matching any name on the watchlist. Examples of the method provide for an effective watchlist screening technology that is capable to minimize both types of errors.

The method comprises a step 102 of providing one or more reference strings representing the "watchlist". For example, the one or more reference strings can be provided in the form of a database persistently stored to a data storage device of the terminal and comprising one or more reference strings. The database can be any kind of logical or physical data storage means, e.g. a directory, a storage device, a partition on a storage device or a set of operatively connected distributed storage devices. Preferably, the database is a database managed by a database management system (DBMS), in particular a relational DBMS. For example, the DBMS can be DB2, MySQL, PostgreSQL, SAP Hana or Oracle. The provided one or more reference strings can comprise several millions of names of individuals and companies. In other examples, the one or more reference strings are stored remotely on a server computer, retrieved by the terminal via the network and are stored only temporarily in memory. Each reference string represents a terrorist or other criminal to be banned from entering a country (or, in other examples, to be banned from accessing another kind of resource). The one or more reference strings are used as the above-mentioned "watchlist".

Next in step 104, each of the reference strings is tokenized into one or more reference tokens that are preferably also stored in the database in association with the reference string from which they were derived. For example, a tokenizing module or software can tokenize each of the reference strings into one or more reference tokens at positions in the reference string where one of a predefined set of one or more delimiters occurs. The set of delimiters can comprise, for example, " ", ",", "." and/or"-".

According to some examples, each of the reference string is pre-processed and "normalized" or "cleaned" in an optional step before it is stored in the database or at least before it is tokenized. For example, the pre-processing can comprise removing diacritics from the reference string and/or expanding a reference string or reference token into commonly known nicknames. The term "expansion" means creating a copy of a string or token, and modifying the copy such that the modified copy reflects the nickname.

Preferably, to save CPU power, the optional pre-processing and the tokenization of the reference strings is performed only rarely and independently of any request, e.g. when initially storing a reference string in a database and/or when the tokenization or pre-processing algorithm is modified. However, in some example implementations, the tokenization of the reference strings can also be performed in response to receiving a request comprising a search string.

Next in step 110, an optical sensor 854 operatively coupled to the terminal captures an optical pattern 868 comprised on a document presented to the sensor. For example, the person trying to pass the border may present his or her passport to the camera of the terminal.

Next in step 111, the terminal obtains a search string from the optical pattern by performing an OCR and/or a computer-implemented image analysis method. Next in step 112, the terminal tokenizes the search string into search tokens. Thereby, the terminal preferably uses the same tokenization algorithm used for tokenizing the reference strings. In some examples, the pre-processing of the search string is performed on the search tokens, and hence, after the tokenization step.

Next in step 114, for each of the search string and the reference strings, a respective name typology is identified. For example, this step can comprise categorizing each token of the respective search string or reference string and then, based on its constituting tokens categorization, identifying at least one name typology for each search and reference string.

The categorization of each token of the respective search string or reference string can comprise identifying the token to be one of: i) particle ii) surname, iii) first name, iv) indistinctively a first name or surname or any and all name elements (middle name, father name, number,...) iv) a title, suffix or prefix (e.g. Mr., HRH, GMBH) v) weighed-stopword (tokens that can safely be removed from a name without altering the name or weighed to be considered as having more/less significance. In addition, the vi) token length in number of characters and/or vii) the incidence of the token into diverse statistical population (language, country) can be determined and used for the token categorization.

According to examples of the method, for each reference string, the following conditions apply and the following steps are performed for identifying the name typology:

- a reference string can contain one or more reference tokens;
- a reference string can be provided as a full name, or as surname, first name, father name, mother name, and can be the name of an individual, an organization, or a vessel, etc;
- for each tokenized reference string, determining the typology of each token including:

  ∘ its most probable associated language (ISO 639-1),
  ∘ its most probable associated country (ISO 3166),
  ∘ its categorization as a:

     i. particle,
     ii. surname,
     iii. first name,
     iv. indistinctively a first name or surname,
     v. any and all name element,
     vi. a suffix or prefix (e.g. Mr., HRH, GMBH),
     vii. a stopword (are tokens that can safely be removed from a text without altering the name),

  ∘ if categorized as a first name, the gender associated to the token (male, female, unknown).

- for each reference string, based on previous step, statistically determining its typology based
- on the following or only part of the following:

  ∘ associated language (ISO 639-1),
  ∘ associated country (ISO 3166),
  ∘ type of named-entity,
  ∘ length of the string,
  ∘ gender if applicable.

Next in step 116, the reference and search string are normalized based on at least one identified name typology. The normalization can comprise normalizing the diacritics in the strings, switching all characters to a consistent case, and/or removing unnecessary space and punctuation.

For example, the normalization step can comprise:

- diacritics normalization;
- switching all characters to lower case;
- punctuation removal;
- suffixes and prefixes removal;
- dictionary-based normalization of first names (e.g. bill = william);

  - normalization of figures and special characters (e.g. twenty one = vingt-et-un = 21; ANORIA = @NORI@);

- transliteration (尺脉 = Chi Mai).

Then, the one or more reference strings are traversed in a loop 126 until all reference strings have been compared with the search string or until at least one match was found.

In the following, the detailed matching which is performed by some example implementations and which is based on extended sets of search and reference tokens is described in detail. Depending on the implementation, the detailed matching can be performed by the terminal or can be performed remotely, e.g. on a server computer. In the following, the terminal-based implementation variant is described but other implementation variants are likewise possible.

The following steps are described for a currently processed reference string. In case of a match, the loop 126 can be aborted, because if the person matches with a name on the watchlist (either in the PF-score-based matching 118-124, or the detailed, PAP-score-based matching), the terminal denies access and may output a warning. In case the currently processed reference string does not match with the search string, the next reference string is compared with the search string until all reference strings in the watchlist have been traversed.

In step 118, a prefilter score PF-score/PFS is computed based on the similarity of the search string and the currently processed reference string, whereby the typologies of the strings are taken into account.

For example, the comparison of strings for computing a PF score based on their typologies can be performed as follows: A prefilter using a similarity algorithm (e.g. jaro, Levenshtein, bag distance,...) is used to avoid sending extremely similar strings to process-intensive AI. This prefilter returns a similarity score:

- Mr Bill Clinton shall match with William Clinton as exact matches, based on prefix removal and dictionary-based normalization.
- johnny halliday shall match with johnny haliday as the similarity is above 97%.

Depending on the typology of each search string upper and lower thresholds are automatically adjusted. The lower and upper threshold evolve based on the typology of the search string (a long Portuguese woman name won't be handled as short English organization name or a French vessel).

In case the prefilter score (PFS) obtained for the currently compared search string-reference string pair is above a predefined acceptance-prefilter score, then in step 124 the method determines that the currently processed reference string is a match. According to some implementations, the loop is automatically terminated.

In case the prefilter score (PFS) is below a predefined rejection-prefilter score, then the currently processed reference string is determined to be a non-match and the next reference string is processed without starting a detailed, token-based and computationally more expensive matching process.

If the score of the prefilter is above the upper threshold or below the lower threshold, the invention returns an indication the match was accepted/rejected without the detailed, token-based matching process (which can involve a machine learning program ("AI"), thereby ensuring "AI explainability" (AIX) also in cases the AI step is skipped.

In case the prefilter score (PFS) is above the predefined rejection-prefilter score and below the predefined acceptance prefilter score, then a more detailed (and computationally more demanding) matching is performed based on extended sets of search and reference tokens as described in greater detail in figure 1b.

According to some examples of the method, the PF-score types are selected from a group comprising:

- exact match based on acronyms, abbreviations, nicknames, and initials based on the search string typology.
- exact match and very close distance similarity based on the search string typology.
- exact match based on name synonyms (e.g. bill=williams) based on the search string typology.
- exact matches based on variation of token orders based on the search string typology.
- exact matches based on similarity of tokens located at end and beginning of strings based on the search string typology;
- exact matches based on but with missing tokens based on the search string typology;
- exact matches based on similarities in characters (0=O;Ü=UE) based on the search string typology.

All this methods ensure a processing-efficient and fast prefiltering, which avoids using unnecessary processing power with performing the detailed string comparison sub-method involving, for example, token expansion, token alignment, CA score computation, and often also the PAP score computation, thereby circumventing limitations that the matching sub-method involving steps 127-144 couldn't solve as effectively: Bill J. Clinton is William Jefferson Clinton and also Bill Clinton and William Clinto, Erwin Müller is Erwin Mueller.

The prefiltering steps 118-124 also help avoiding to compare the reference string Erwin Müller and search string Jean Renoir in the detailed, token-based matching steps 127-144 as they can be discarded immediately. Likewise, it is possible to match directly Erwin Müller with Erwin Müller in step 142 without the help of the detailed, token-based matching steps 127-144. This has a direct positive impact on performance and reduces CPU and energy consumption.

The steps 118-124 are optional steps which represent a preprocessing filter step. The preprocessing and string-based filtering provides the benefit of significantly increasing performance. In case a pre-processing step was performed on the reference strings, then also the dynamically received search string is pre-processed by the terminal using the same pre-processing algorithm.

In step 127, the terminal computes an extended set of reference tokens which includes the originally created set of reference tokens and fused reference tokens which have been created by concatenating two or more of the reference tokens. Preferably, the concatenation is performed irrespective of the original order of the reference tokens. Preferably, the extended set of reference tokens comprises the totality of combinatorically possible token concatenations, whereby some optional constraints may be considered such as "not more than three tokens concatenated" or "the concatenated tokens must not have more than X tokens in-between".

In step 128, an extended set of search tokens is created analogously to step 127. Step 128 may also be executed before or in parallel to step 127.

In step 129, the terminal creates a set of candidate alignments. Each candidate alignment consists of a first alignment partner and a second alignment partner. The first alignment partner is a single one of the search tokens or a single "concatenated search token" (that may also be referred to as "artificial search token"). The "concatenated search token" has been created in step 128 by concatenating two or more of the search tokens created in the tokenization step.

The second alignment partner is a single one of the reference tokens or a single "concatenated reference token" (that may also be referred to as "artificial reference token"). The "concatenated reference token" has been created in step 127 by concatenating two or more of the reference tokens created by the tokenization of the currently processed reference string.

The number of candidate alignments can be huge, in particular if the search string and/or the currently processed reference string have been tokenized into a plurality of tokens. For example, the "artificial" search or reference tokens may have been created by concatenating adjacent or non-adjacent tokens. In addition, or alternatively, the "artificial" search or reference tokens may have been created by concatenating tokens in accordance with or in deviation of the original token order in the respective source string. In addition, or alternatively, the "artificial" search or reference tokens may have been created by concatenating different numbers of tokens, e.g. 2 or 3, depending on the length and delimiter content of the original string and/or depending on the specific implementation of the software algorithm that automatically creates the "artificial" search or reference tokens to be used as additional alignment partners. According to some examples, the candidate alignments are generated by creating all combinatory possible unique pairs of any single one of the search tokens and any single one of the reference tokens. In addition to all possible candidate alignments formed from single token pairs, a plurality of candidate alignments of "artificial" search and reference tokens with each other and with "original" search or reference tokens is created, whereby the "artificial" search and reference tokens are respectively created by concatenating two or more tokens of the same source string.

According to one concrete example, the search string and the search tokens generated therefrom can be:

Search string: "sultan al hassam mohamet"

Search tokens: "sultan", "al", "hassam", "mohamet"

The currently processed reference string and the reference tokens created therefrom can be:

Reference string: "muhammad alhasam"

Reference tokens: "muhammad", "alhasam".

According to one example, the following candidate alignments are automatically created, whereby the first alignment partners derived from the search string are presented on the left side and the second alignment partners derived from the currently processed reference string are presented on the right side of the candidate alignment indicated by the " |" character:

| CA-ID | Candidate Alignment |
|-------|---------------------|
| 01 | sultan\|muhammad |
| 02 | sultan\|alhasam |
| 03 | al\|muhammad |
| 04 | al\|alhasam |
| 05 | hassam \| muhammad |

(continued)

| CA-ID | Candidate Alignment |
|-------|---------------------|
| 06 | hassam \| alhasam |
| 07 | mohamet\|muhammad ** |
| 08 | mohamet\|alhasam |
| 09 | sultanal\| muhammad |
| 10 | sultanal\|alhasam |
| 11 | alhassam \| muhammad |
| 12 | alhassam\|alhasam * |
| 13 | hassammohamet\|muhammad |
| 14 | hassammohamet \| alhasam |
| 15 | sultan \| muhammadalhasam |
| 16 | al\|muhammadalhasam |
| 17 | hassam \| muhammadalhasam |
| 18 | mohamet\|muhammadalhasam |
| 19 | alsultan\|muhammad |
| 20 | alsultan\|alhasam |
| 21 | sultanhassam \| muhammad |
| 22 | sultanhassam \| alhasam |
| 23 | hassamsultan \| muhammad |
| 24 | hassamsultan \| alhasam |
| 25 | hassamal\|muhammad |
| 26 | hassamal\|alhasam |
| 27 | sultan moha met muham mad |
| 28 | sultanmohamet\|alhasam |
| 29 | mohametsultan \| muhammad |
| 30 | mohametsultan \| alhasam |
| 31 | almohamet\|muhammad |
| 32 | almohamet\|alhasam |
| 33 | mohametal\| muhammad |
| 34 | mohametal\|alhasam |
| 35 | mohamethassam \| muhammad |
| 36 | mohamethassam \| alhasam |
| 37 | sultan\|alhasammuhammad |
| 38 | al\|alhasammuhammad |
| 39 | hassam\|alhasammuhammad |
| 40 | mohamet\|alhasammuhammad |

According to a preferred example, only a sub-set of the above-mentioned candidate alignments are automatically created to increase performance. For example, the creation of the "artificial" search and reference tokens that are used for creating most of the first or second alignment partners is performed such that not more than two tokens are concatenated. The result of this "restricted" alignment partner creation algorithm is presented below:

| CA-ID | Candidate Alignment |
|---|---|
| 01 | sultan \| muhammad |
| 02 | sultan\|alhasam |
| 03 | al\|muhammad |
| 04 | al\|alhasam |
| 05 | hassam\|muhammad |
| 06 | hassam \| alhasam |
| 07 | mohamet\|muhammad ** |
| 08 | mohamet\|alhasam |
| 09 | sultanal\| muhammad |
| 10 | sultanal\|alhasam |
| 11 | alhassam \| muhammad |
| 12 | alhassam\|alhasam * |
| 13 | hassammohamet\|muhammad |
| 14 | hassammohamet \| alhasam |
| 15 | sultan \| muhammadalhasam |
| 16 | al\|muhammadalhasam |
| 17 | hassam \| muhammadalhasam |
| 18 | mohamet \| muhammadalhasam |

Next in step 130, the method comprises computing a candidate-alignment score - CA score - for each of the candidate alignments created for the reference string. The CA score is a numerical value indicative of the similarity of the first and second alignment partners. In the two tables above, candidate alignment 12 marked by (*) has the highest CA score and candidate alignment 07 marked by (**) has the second highest CA score of all candidate alignments.

The CA score can represent, for example, a syntactical similarity of the first and second alignment partners, in particular an editing distance, e.g. Levenshtein distance, Jaro-Winkler distance, Jaccard similarity, etc.. In addition, or alternatively, the CA-score can be indicative of a phonetic similarity of the first and second alignment partners, in particular Soundex, or Double Metaphone. In addition, or alternatively, the CA-score can be indicative of any other similarity measure that can be computed as a function of the type and position of the characters contained in the first and second alignment partners of the candidate alignment. Preferably, the CA score is a score that can be computed comparatively quickly. Then, the candidate alignments can be sorted or otherwise processed or organized in accordance with their respectively computed CA-score for easing the selection of one or more of the candidate alignments having the highest CA-scores. According to some examples, the candidate alignments and their respectively computed CA scores are stored in the database permanently and/or are stored temporarily in the main memory.

Next in step 132, the method comprises identifying, by the server computer, the one or more of the candidate alignments having the highest CA scores and which - if combined with each other - comprise the largest number of the search tokens but do not comprise any one of the search tokens twice. The optimal alignment may comprise candidate alignments comprising or consisting of original tokens (i.e., tokens created by the tokenization step) and/or candidate alignments comprising or consisting of "artificial, concatenated" tokens. In the above provided example, the two candidate alignments number 07 and 12 would be identified as a set of two candidate alignments fulfilling the above-mentioned criteria best. These two candidate alignments are combined to form the optimal alignment given below, whereby the candidate alignment 07 and candidate alignment 12 are preferably separated by a predefined delimiter, e.g. a space character:

$$\frac{mohamet \quad alhassam}{muhammad \quad alhasam}$$

It should be noted that the optimal alignment may not always comprise multiple candidate alignments. For example, in case the search string and the reference string do not comprise a delimiter that results in the generation of two or more tokens, or in case the highest CA-score is obtained for a pair of first and second alignment partners respectively having been created by concatenating all tokens in the respective source string, this particular candidate alignment alone may be used as and may constitute the optimal alignment. However, according to preferred examples, at least the search string and typically also most of the reference strings will be tokenized into a plurality of tokens. In addition, according to preferred examples, the number of tokens that can be concatenated to form a first or second alignment partner is limited to two or three tokens only. Therefore, a situation that a single candidate alignment is identified and used as the optimal alignment is an exceptional case. For most of the implementation variants and for most of the reference strings comprised in the watchlist, the optimal alignment comprises multiple candidate alignments.

Next in step 134, the CA scores of the alignments in the optimum alignment are aggregated to obtain an aggregated CA score. For example, the aggregated CA score can be computed using a max, mean, or median function. The aggregated CA score is compared with a predefined aggregated CA score threshold.

In case 138 the aggregated CA score is below the aggregated CA score threshold, the currently processed reference string is considered to be a "non-match" and the method continues with the selection of the next not yet processed reference string in the watchlist, if any. The step 138 is an optional filter step which increase performance, because in case the aggregated CA score is below this threshold, the computationally demanding PAP-score computation is skipped.

In case 136 the aggregated CA score is above the aggregated CA score threshold, for each candidate alignment in the optimal alignment, one or more paired-alignment partner-scores - PAP-scores are computed. For example, in case a single PAP-score is computed pair candidate alignments, there will in total two PAP-scores computed for the optimal alignment in the above described example, because this optimal alignment comprises two candidate alignments 07 and 12. Each PAP-score is indicative of the similarity of the first and second alignment partners in a candidate alignment contained in an optimal alignment. After step 136, the step 140 is executed.

The aim of step 140 is to provide a good data basis allowing a prediction module, e.g. a trained machine learning program, to predict, using the one or more PAP-scores and for the data as input, whether or not the search entity and the reference entity are identical. Typically, the computation of the one or more PAP-scores for each of the candidate alignments in the optimal alignment is more complex and/or consumes more processing power than the computation of the CA scores for each of the automatically generated candidate alignments. This is possible even in a real-time context, because the PAP-scores are computed only for the optimal alignment, and hence, are computed only for a strongly limited number of candidate alignments per reference string.

Preferably, in order to increase the data basis for the prediction, for each of the candidate alignments in the optimal alignments, PAP-scores of many different types are computed. For example, the PAP-scores computed for each candidate alignment in the optimal alignment can comprise one or more of the following similarity score types:

a. a syntactical similarity score (including e.g. Levenshtein distance, Jaro-Winkler distance, Jaccard similarity, longest common substring, etc.),

b. a string similarity score based on hashing functions, computing the hashing based on the most frequent k characters,

c. a syntactical similarity score (including those named under a.), for the characters in the candidate alignment in reverse order,

d. a syntactical similarity score based on n-gram count vectors (including unigrams, bigrams, trigrams, etc.) like L1 distance, cosine similarity, Jaccard similarity, etc.,

e. a phonetic similarity score (e.g. Soundex, Metaphone, Nysiis, Double Metaphone, Beider-Morse Phonetic Matching, Editex, etc.);

f. a syntactical similarity scores (including e.g. Levenshtein distance, Jaro-Winkler distance, Jaccard similarity, etc.), based on phonetic codes (including e.g. Soundex, Double Metaphone, Beider-Morse Phonetic Matching, Editex, etc.) having been computed for the alignment partners in the candidate alignment;

g. a further similarity score (representing e.g. whether the first, second, or last letters of the first and second alignment partners match, whether both first letters are both vowels or consonants, the difference in the number of consonants or vowels or syllables, the difference in number of characters of the first and second alignment partner, difference in number of matching characters from beginning or end, whether one alignment partner is substring of another, etc.),

h. a semantic similarity score being indicative of the similarity of the semantic concepts represented by the compared alignment partners. For example, the semantic similarity score can be indicative of the semantic similarity of one or more attributes of the entities represented by the search string and the reference strings. For example, the attributes can be ethnicity and gender. For example, the semantic similarity score can be computed based on a vector representation for each of the first and the second alignment partners in the candidate alignment. The vector representation can be computed, for example, by a machine learning program having been trained on semantically annotated vector representations of strings or tokens in a training data set. For example, the vector representation can be computed for many different language e.g. using tools such as FastText, GloVe, and/or Word2vec. For example, representing strings or tokens as a feature vector in accordance with the above-mentioned approaches may be able to capture multiple different degrees of similarity between words. Mikolov et al. (Mikolov, Tomas; Yih, Wen-tau; Zweig, Geoffrey (2013). "Linguistic Regularities in Continuous Space Word Representations". Hlt-Naacl: 746-751) found that semantic and syntactic patterns in texts and strings can be reproduced using vector arithmetic. Patterns such as "Man is to Woman as Brother is to Sister" can be generated through algebraic operations on the vector representations of these words such that the vector representation of "Brother" - "Man" + "Woman" produces a result which is closest to the vector representation of "Sister" in the model. Such relationships can be generated for a range of semantic relations such as country-citizen and others. According to other examples, the semantic similarity score is computed from the entities' names directly without making use of a vocabulary or taxonomy. For example, the semantic similarity score can be computed from information such as POS tags or syntactical attributes of a character sequence or by comparing word-vector representations provided by a neural network. For example, syntactically and phonetically different words can both represent a company and may be recognized by a trained machine learning program to represent semantically similar concepts. The strings "car" and "automobile" are syntactically and phonetically highly different, but in a 200-dimensional word embedding based on GloVe the cosine similarity of their two vectors is 75%. Hence, according to some examples, the semantic similarity score for two alignment partners is computed by representing each alignment partner in the form of a multidimensional word vector, whereby at least some of the dimensions represent semantic aspects of the words, and computing the distance of the two vectors in the multidimensional vector space;

i. an omission similarity score; the omission characters-based similarity scores are similarity scores computed as a function of the most common orthographical errors and are therefore language-dependent (see example provided in page 13); computing the omission similarity score can comprise reordering the characters in each alignment partner in the candidate alignment by the frequency of most often omitted characters, before computing a syntactical similarity scores named under a),

j. a semantic similarity score that represents whether the one or more tokens contained in the first alignment partner and the one or more tokens contained in the second alignment partner are indicative of an identical ethnicity; the PAP-score type j) can be computed as described with reference to the semantic similarity scoring of h) for the semantic feature "ethnicity of a person" or can exploit the evaluation of electronic dictionaries comprising the most common n-grams or syllables with respect to names of certain ethnicity; preferably, each alignment partner is represented in a multidimensional vector space; in addition, a plurality of names of persons of many different ethnicities are also represented as word vectors in the vector space, e.g. based on GloVe or WordVector; then, the shortest distance of each of the two alignment partners to the word vectors representing names of different ethnicities is identified for identifying the ethnicity represented by the first and second alignment partner, respectively; then, it is determined if the ethnicities identified for the first and second alignment partner are identical and the result of this determination is represented as numerical value, i.e., the semantic similarity score that represents whether the one or more tokens contained in the first alignment partner and the one or more tokens contained in the second alignment partner are indicative of an identical ethnicity;

k. a semantic similarity score that represent whether the gender (in case of natural persons) is consistent based on a pre-trained classifier; the PAP-score type k) can be computed as described with reference to the semantic similarity scoring of h) for the semantic feature "gender of a person" or dictionaries with the most common n-grams or syllables with respect to gender). Preferably, the semantic similarity score that represent whether the gender (in case of natural persons) is consistent (identical for the first and second alignment partner) is computed based on a word vector comparison described in j) for the ethnicity.

According to some examples, for one or more of the PAP-score types a-k, two or more PAP-scores of different sub-types can be computed; for example, in respect to a), both the Levenshtein distance and the Jaro-Winkler distance can be computed for each of the candidate alignments in the optimal alignment. The "gender similarity PAP-score" according to k) can be computed according to two alternative approaches, i.e. in the form of a first "gender similarity PAP-score" computed by using the word-vector based semantic similarity scoring of h) and in the form of a second "gender similarity PAP-score" computed by using a dictionary of gender-specific n-grams.

According to some examples, the PAP-score computation is performed as follows: For each one of a plurality "t" of different PAP-score types (in particular syntactical and/or semantical PAP-score types), and for each of a number "c" of candidate alignments in the optimal alignment, a PAP-score is computed. Then, for each of the "p" PAP-score types, one or more aggregate PAP-score types are computed by aggregating all "c" PAP-scores having been computed for this PAP-score type. For example, the aggregation algorithm(s) can be the mean, the standard deviation, maximum, minimum, percentiles, product, number or fraction of identical characters, etc. or combinations of two or more of the aforementioned aggregation operations. Hence, in case a number of "a" different aggregate functions are used, a number of "p" x "a" aggregate PAP-scores are obtained, wherein a can be any integer larger than 0.

According to some examples, computing an aggregate PAP score can comprise computing one or more aggregated PAP scores of different types that are computed, for example, as described below.

For example, the optimal alignment may comprise the two strings "Andrea Smith" and "Andreas Smyth". The Jaro-Winkler distance between strings x and y is denoted as JW(x,y). Then one or more of the following aggregated PAP scores are computed:

- MEAN(JW("Andrea", "Andreas"), JW("Smith", "Smyth"))
- MAX(JW("Andrea", "Andreas"), JW("Smith", "Smyth"))
- MIN(JW("Andrea", "Andreas"), JW("Smith", "Smyth"))
- PRODUCT(JW("Andrea", "Andreas"), JW("Smith", "Smyth"))
- MEAN(MAX(JW("Andrea","Andreas"),    JW("Andrea",    "Smyth")),    MAX(JW("Smith","Andreas"),    JW("Smith", "Smyth")) ... plus many other aggregating alternatives.

In some examples, in addition to the above-mentioned aggregate PAP scores, the JW on the full strings JW("Andrea Smith", "Andreas Smyth") can be computed and used as a further "aggregated" PAP score.

According to some examples, in a further optional step, the first alignment partners of all candidate alignments within the optimal alignment are concatenated to form a single "first optimal alignment partner" being free of the delimiter(s) having previously separated the candidate alignments in the optimal alignment. In addition, the second alignment partners of all candidate alignments within the optimal alignment are concatenated to form a single "second optimal alignment partner" being free of the delimiter(s) having previously separated the candidate alignments in the optimal alignment. Then, PAP-scores of some or all of the different PAP-score types listed under a)-k) can be computed for the first and second "delimiter-free" optimal alignment partners and these PAP-scores can be used in addition to the already computed PAP-scores as input of a prediction software.

Next in step 140, the terminal computes a prediction whether the reference string represents the same entity as the search string as a function of the one or more PAP-scores of all candidate alignments in the optimal alignment. The prediction comprises a prediction score being indicative of the likelihood that the person requesting to pass the border is the criminal person represented by the currently processed reference string of the watchlist. The larger the number of PAP-score types computed, the larger the databases that can be used for the prediction and the higher the accuracy of the prediction. According to some examples, the software used for performing the prediction is a machine learning software, e.g. a trained neural network or trained support vector machine.

For example, the prediction software can be a trained machine learning program, e.g. a classifier, configured to output a probability the score that indicates the probability that the search entity and the reference entity are identical, e.g., are the same natural or legal person. The final decision (to whether the search string and the reference string represent the same entity or not) is made by comparing the probability score to a pre-defined threshold. The pre-defined threshold can be set at different levels (e.g. 30%, 50%, 70%, or else) depending on the risk/cost compromise level desired in the respective use case scenario. For example, in case severe security risks are associated with a false negative result, the threshold can be set to a comparatively low value, e.g. 30%. On the other side, if a false positive prediction (identity of entities predicted although the search entity differs from the reference entity) is considered worse than a false negative prediction, the threshold can be set to a significantly higher level, e.g. 70%.

The applicant has observed that in particular the one of the candidate alignments in the optimal alignment for which the minimum PAP-score value is obtained (according to some examples, the PAP-scores of the different types of PAP-scores are normalized before identifying the minimum PAP-score to improve comparability) has strong predictive power in respect to whether or not the search entity and the reference entity are identical. This is in particular the case if the minimum PAP-score is a semantic similarity score, for example the gender. For example, the editing distance between a first alignment partner "Andrea" and a second alignment partner "Andreas" in a particular candidate alignment may be very high, but the semantic similarity score for the two strings is very low, at least for the German language, because the term "Andrea" is indicative of a female person while the term "Andreas" is indicative of a male person and hence the low PAP-score for the semantic attribute "gender" is a strong indicator that search entity and reference entity are not identical. Therefore, taking into account the minimum PAP-score having been computed for any of the candidate alignments in an optimal alignment when predicting entity identity has been observed to be highly beneficial and to strongly increase prediction accuracy. Taking into consideration the minimum PAP-score value can be performed explicitly, e.g. in implementation variants where the prediction is completely or partially performed based on a set of rules. However, other examples using machine learning approaches, act as black boxes and it may not be possible to specify how exactly the minimum PAP-score is considered for performing the prediction. However, it could be observed, that providing the minimum PAP-score as input to a machine learning based prediction program at training and test phase may increase the accuracy of the prediction result.

Providing a machine learning program with the identified minimum PAP-scores of the optimal alignment during and after training in combination with the one or more aggregate PAP-scores has been observed to be beneficial, because these parameters and in particular the minimum PAP-scores have been observed to be highly predictive of a true match (search and reference entity being identical) and ensure that a low number of input parameters provides highly accurate prediction results. As a consequence, a fast and nevertheless accurate fuzzy string matching method is provided that may be capable of evaluating one or more search strings against millions of reference strings in real-time.

The prediction score computed in step 140 is then compared with a prediction score threshold. The prediction score threshold may be set in the configurations of the software program of the terminal implementing the matching method depicted in figure 1. In some examples, the software program may provide a GUI enabling a user to set watch list-specific prediction score thresholds. This may have the advantage that the number of false negatives to be expected may be flexibly adapted to the security risk associated with the persons represented in the respective watchlist.

In case 144 the prediction score is below the prediction score threshold, the currently processed reference string is considered a "non-match" and the next, not yet selected reference string is selected.

In case 142 the prediction score is above the prediction score threshold, the currently processed reference string is considered a "match" and the person is denied access to the country.

Only in case the loop 126 has been executed for all reference strings in the watchlist and not a single match was found, the person is granted access to the requested resource, in this case, the territory of a country.

The method depicted in the flowchart of claim 1 has been described with reference to a border control terminal adapted to perform a string matching method on an optically captured search string and a watchlist of millions of reference strings in real-time. However, according to alternative implementation variants, the method can be executed also by an application program running on other devices, e.g. a client device in a client-server architecture, or running on any other type of data processing system, e.g. a desktop computer, smart phone, tablet computer or the like. According to further examples, the method can be implemented as a cloud service and can be executed by a plurality of data processing devices functionally integrated in a cloud service architecture.

Examples of the methods and systems described herein may be robust against errors which often occur when reading a name string from a document using an optical sensor, namely additional gaps in the string, truncated tokens and concatenations of tokens.

Gaps in number of tokens between search and reference strings

Search and reference strings can have a large discrepancy into the number of tokens that constitute them. For example, the OCR method may erroneously identify multiple space characters, or may not able to identify some characters or tokens due to dirt or a deteriorated print. Typically, when you know that Pablo Picasso full name was Pablo Diego José Francisco de Paula Juan Nepomuceno Maria de los Remedios Cipriano de la Santisima Trinidad Ruiz y Picasso, it is understandable that it was systematically shortened as Pablo Ruiz Picasso. However, these 2 strings should match. This example is obviously an extreme. In most contexts, searching on Pablo Picasso should return Pablo Ruiz Picasso and vice-versa. Similarly searching on Abdallah Fazul Mohammed should return Abdallah Mohammed ibn Fazul Mohammed, and searching on Jacques Pascal Leneuveu return Jacques Leneuveu. When confronted to such situations, examples of the methods and systems described herein permit to parametrize the maximum number of tokens between the search and reference strings and the minimum number of tokens per string based on their typology ensuring that large gaps can be either accepted or rejected.

Similarities in the beginning and end of names can be more significant than other name parts. In Arabic, Aysha Mazar Rashed Mohamed Erakat is typically the daughter of Mazar Rashed Mohamed Erakat. When handling gaps in number of tokens, the invention permits to parametrize if a match should be considered when the beginning and end of the names pair is dissimilar/similar.

Truncation occurs when names are shortened. There are several reasons why names are truncated. Typically, name truncation occurs for data coming from passports when MRZ (Machine Readable Zone) is used. One or more name components are then truncated due to the limitation in number of characters as the example below illustrates:

- Name: Nilavadhanananda Arnpol Petch Charonguang
- MRZ: NILAVADHANANANDA>>ARNPOL>PETCH>CHARONGU.

The examples described herein may permit to parametrize handling of search and reference strings containing truncated tokens based on their typology. Truncation of tokens can be either accepted or rejected. The maximum number of characters that are considered as valid truncation can also b specified.

Concatenation occurs when joining name elements end-to-end. This can happen e.g. when a delimiter is not identified by the automated acquisition and/or decoding of the optical pattern.

In addition, the concatenation may depend on the language and the type of the token (name, title, etc). Examples of the method and system described herein may allow to parametrize handling of search and reference strings containing concatenated tokens based on the automated token expansion and artificial token creation/fusion step and/or based on their typology.

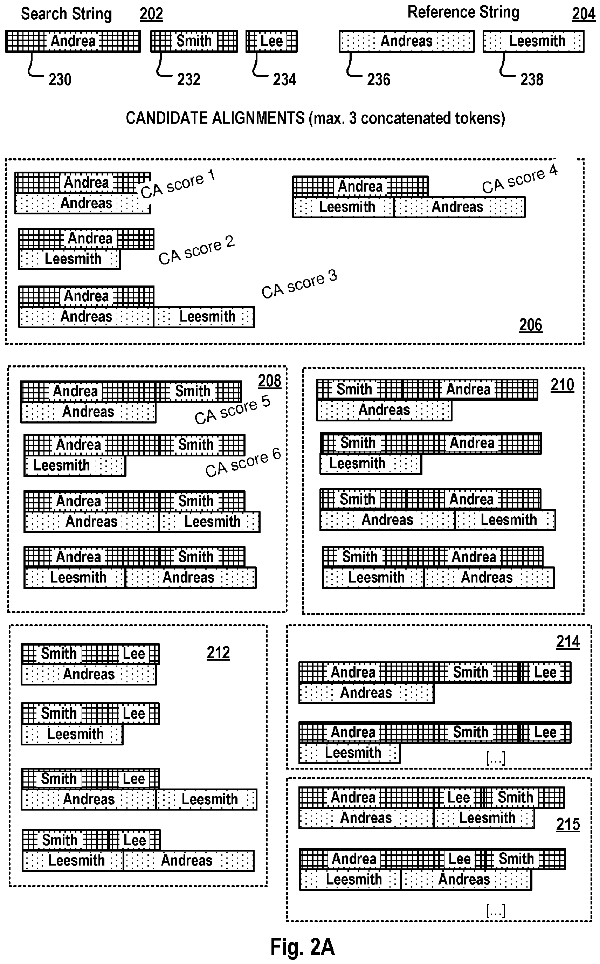

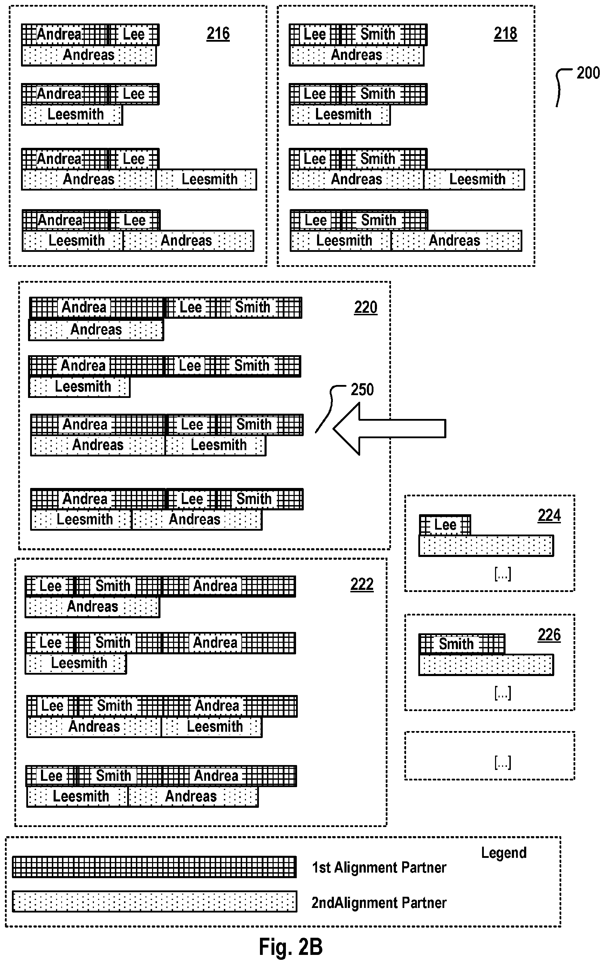

**Figure** 2 depicts a set of candidate alignments 200 according to one example implementation. The set of candidate alignments 200 has been created fully automatically based on three search tokens 232, 234, 236 created by tokenizing a search string 202 and based on two reference tokens 238, 240 created by tokenizing a currently processed reference string 204. The set of candidate alignments is organized in different sub-sets 206, 208, 210, 212, 214, 216, 218, 220, 222, 2024, 226 for illustration purposes only. For example, the four candidate alignments in the subset 206 are created by using the single search token 232 as first alignment partner and combining this first alignment partner with four different second alignment partners, i.e., "Andreas", "Leesmith", "AndreasLeesmith" and "LeesmithAndreas". Two of the second alignment partners are single, "original" reference tokens obtained from the reference string 204 during the tokenization. A further one of the second alignment partners of this subset 206 has been created by concatenating the reference tokens in accordance with their original order in the reference string. A further one of the second alignment partners of the subset 206 has been created by concatenating the two reference tokens in a different order. It should be noted that none of the first or second binding partners comprises a delimiter used as a tokenizing signal in the tokenization process. In case a first or second alignment partner is formed by concatenating two or more search or reference tokens, no delimiting character is introduced.

The subset 208 of the automatically created set of candidate alignments has been created by combining a particular, artificially created concatenated search token "AndreaSmith" with the above-mentioned four different second alignment partners.

The subset 210 differs from subset 208 in that the search tokens having been concatenated to form the first alignment partner have been concatenated in different order.

Candidate alignment subset 212 has been created based on a first alignment partner having been created by concatenating the two search tokens "Smith" and "Lee" into "SmithLee".

Candidate alignment subset 214 has been created based on a first alignment partner created by concatenating the three search tokens "Andrea", "Smith" and "Lee" into "AndreaSmithLee" in accordance with the original token order.

Candidate alignment subset 215 has been created based on a first alignment partner created by concatenating the three search tokens "Andrea", "Smith" and "Lee" into "Andrea-LeeSmith" in a different token order.

Candidate alignment subset 216 has been created based on a first alignment partner having been created by concatenating the two search tokens "Andrea" and "Lee" into "Andrea-Lee", whereby the original search token order was maintained and two non- adjacent search tokens have been concatenated.

The set of automatically created candidate tokens comprises further subsets 218, 220, 222, 224, 226, ..., which in combination correspond to the totality of combinatorically possible unique combinations of first and second alignment partners. The set of first alignment partners, again, can be created automatically by creating some or all of the combinatorically possible combinations of one or more of the search tokens, whereby the "combination" for the purpose of alignment partner creation implies a concatenation, not an alignment. Likewise, the set of second alignment partners, can be created automatically by creating some or all of the combinatorically possible combinations of one or more of the reference tokens, whereby the "combination" for the purpose of alignment partner creation implies a concatenation, not an alignment.

The set of candidate alignments 200 depicted in figure 2 have been created such that a concatenation of originally adjacent as well as non-adjacent tokens is performed, such that a concatenation of tokens in accordance with their original order as well as in deviation of the original order is performed, and such that a concatenation of up to three original tokens (see subsets 214, 215, 220, 222) is performed.

For each of the candidate alignments 200, a respective CA-score is computed being indicative of the similarity of the first and second alignment partners, in particular of a similarity measured in an editing distance. Preferably, the CA score is a quickly computed score reflecting an edit distance or an aggregated value of a few, e.g. two or three, edit distance measures. Candidate alignment 250 contained in subset 220 is identified as the one of the candidate alignments having the highest CA-score and is therefore used as it is as the optimal alignment of the search string 202 and the currently processed reference string 204.

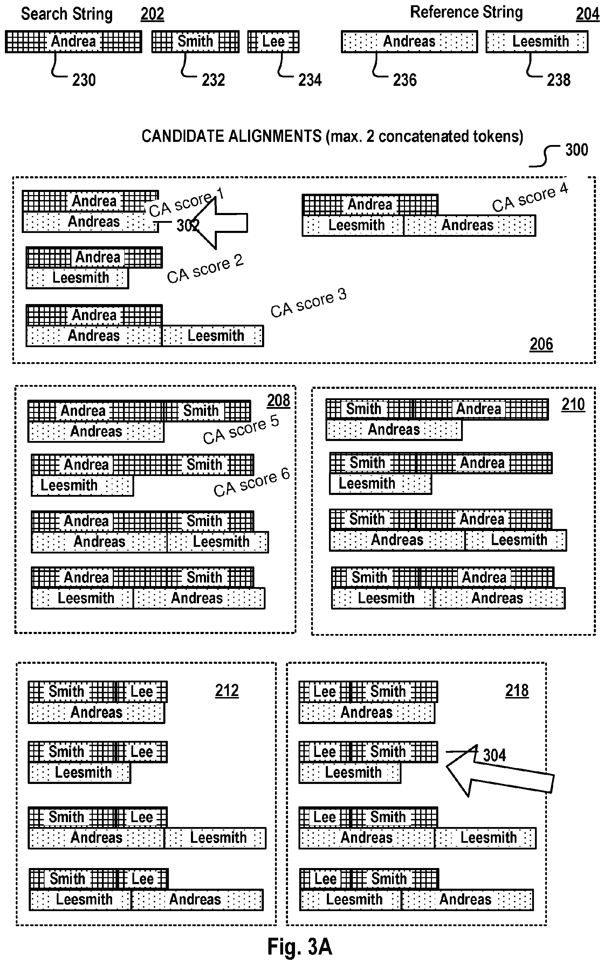

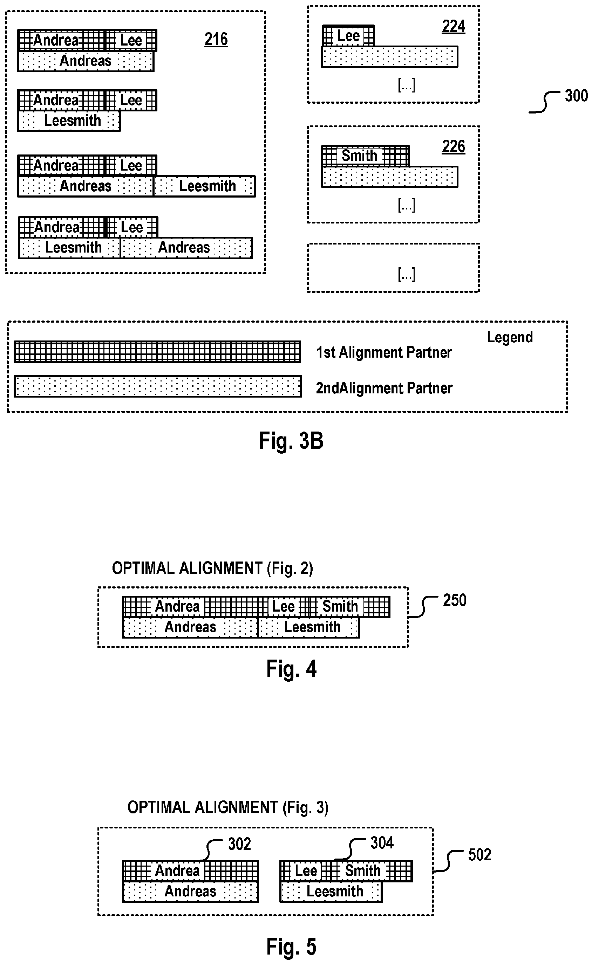

According to preferred implementations, the set of automatically created first and second alignment partners and hence also the set of automatically created candidate alignments is smaller in order to improve performance. An example of the set of candidate alignments that does not cover the totality of combinatorically possible concatenation's and combinations of the search and reference tokens is depicted in figure 3.

**Figure** 3 depicts a set of candidate alignments 300 according to another example. The set of candidate alignments 300 is a subset of the candidate alignment set 200 described in figure 2. The candidate alignment set 300 is smaller than set 200, because the concatenation of more than two search (or reference) tokens in order to create a first (or second) alignment partner is not allowed. Therefore, the candidate alignment subsets 214, 215, 220 and 222 do not exist in the set 300.

Candidate alignment 302 contained in subset 206 and candidate alignment 304 contained in subset 218 are identified, among other candidate alignments, as having very high CA-scores. A combination of candidate alignment 302 and 304 in addition fulfills the criterion that all search tokens 232, 234, 236 are covered by a combination of these two high-scoring candidate alignments without comprising any search token twice. Therefore, a combination of candidate alignment 302 and candidate alignment 304 is used as the optimal alignment of the search string 202 and the currently processed reference string 204 according to an implementation example using the alignment creation approach described with reference to figure 3.

**Figure 4** depicts an optimal alignment derived from the candidate alignment set 200 depicted in figure 2. In this example, the optimal alignment is identical to the one of the candidate alignments 250 having the highest CA-score.

**Figure** 5 depicts an optimal alignment 502 derived from the candidate alignment set 300 depicted in figure 3. In this example, the optimal alignment consists of a combination of candidate alignment 302 and candidate alignment 304, whereby the alignments are separated by a delimiter, e.g. a space character.

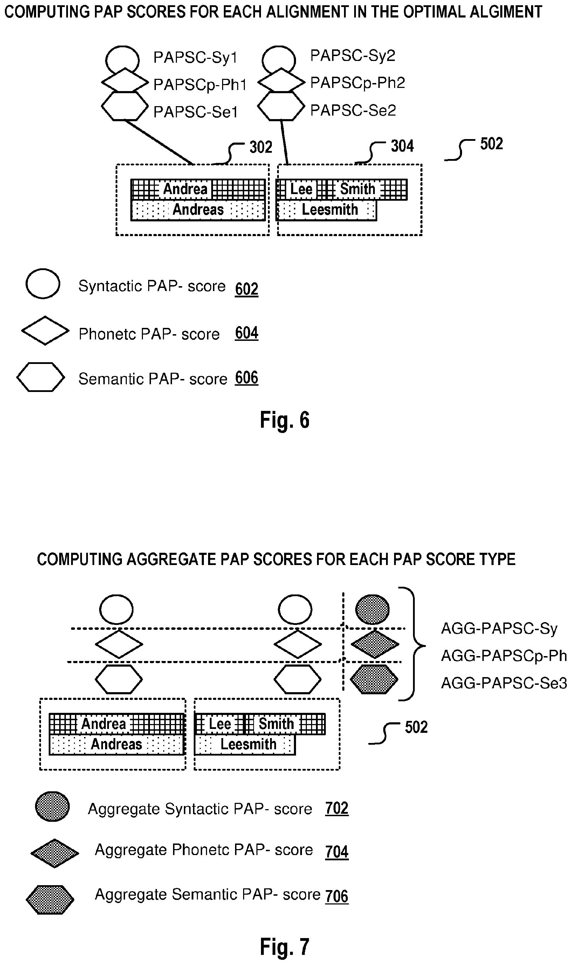

**Figure 6** depicts the computation of PAP-scores of three different PAP-score types 602, 604, 606 for each candidate alignment 302, 304 in the optimal alignment 502 depicted in figure 5. For example, for the candidate alignment 302, a syntactic PAP-score value PAPSC-Sy1, a phonetic PAP-score value PAPSCp-Ph1 and a semantic PAP-score value PAPSC-Se1 (being indicative of e.g. the inverse Levensthein distance, the Soundex-similarity and the gender similarity of "Andrea" and "Andreas") is computed. For the candidate alignment 304, a syntactic PAP-score value PAPSC-Sy2, a phonetic PAP-score value PAPSCp-Ph2 and a semantic PAP-score value PAPSC-Se2 (being indicative of e.g. the inverse Levensthein distance, the Soundex-similarity and the gender similarity of "LeeSmith" and "Leesmith") is computed.

**Figure 7** depicts the computation of an aggregate PAP-score 702, 704, 706 from all PAP-scores of the optimal alignment for each of three different PAP-score types 602, 604, 607. For example, an aggregate syntactic PAP-score AGG-PAPSC-Sy can be computed as an average of PAPSC-Sy1 and PAPSC-Sy2. An aggregate phonetic PAP-score AGG-PAPSC-Ph can be computed as an average of PAPSC-Ph1 and PAPSC-Ph2. An aggregate semantic PAP-score AGG-PAPSC-Se for gender identity can be computed as an average of PAPSC-Se1 and PAPSC-Se2.

In the depicted example, the semantic gender identity scores for the alignment partners "Andrea" and "Andreas" will probably very low and will constitute the minimum PAP-score value obtained for the optimal alignment 502. This minimum PAP-score value has been observed to be of high predictive power in respect to the identity of the search entity and reference entity that is to be predicted, in particular if the minimum observed PAP-score value is observed in a semantic PAP-score type. In other words, a very low semantic similarity score, e.g. a very low gender similarity score, may outweigh a high syntactic or phonetic similarity score. The computation of semantic similarity scores is often computationally much more expensive than the computation of a syntactic or phonetical similarity score, because the accurate classification of terms into semantic categories often involves complex data processing routines implemented by trained machine learning programs consuming a significant amount of CPU and memory resources. According to preferred examples, the computation of semantic similarity scores is only performed in the context of PAP-score computation, not for the purpose of CA-score computation. This may ensure that the overall string matching process remains fast and suited for use in real-time applications.

**Figure** 8 depicts a distributed computer system 800 for real-time document-based access control implemented as client-server architecture. The system comprises a server computer system 804 and one or more client computer systems 802, 824 connected to the server computer system via a network 826, e.g. the Internet or an intranet. For example, the client computer system 802, 824 can be a computer system of a user, e.g. an owner of a bank account who intends to create a bank account remotely for transferring some money from his or her new bank account to a target bank account owned by a particular entity. For example, the client computer system can comprise a client application 806 that is interoperable with the server application 811 hosted on the server computer system.

The client computer (e.g. a smartphone or notebook of the user) comprises an optical sensor 864, e.g. a camera. The client application can comprise a graphical user interface enabling the user 856 to enter personal details such as name or address. In addition, the client application is configured to capture user credentials specified in the MRZ (or VIZ) 868 of an ID-Document 866 of the user, e.g. the users' name or address via the optical sensor 864. The capturing of the user credentials via a camera is performed in order to receive and/or verify the user's identity based on an official, trustworthy ID-Document. The client application performs an OCR procedure on the image data received from the optical sensor in order to obtain the name of the person and use it as a search string. The search string is submitted in the form of an account creation request from the client computer to the server computer system of the bank where the bank account is to be created. The bank maintains a watchlist which is stored in the form of a list of reference strings 810 in a database 808 comprised in or operatively coupled to the server computer system. Preferably, each reference string is semantically tagged with one or more attribute values. For example, the database may comprise, for each of the reference strings, one or more attribute values stored in association with the reference string and being indicative of attributes of the respective person such as gender/legal form, nationality/language in which the name is specified, date of birth, etc.

Each of the reference strings can be pre-processed by an optional string pre-processing unit or module 814 and an index 812 for each of the pre-processed reference strings can be created. The pretreatment of the reference strings can comprise, for example, removing duplicates, removing diacritics, expanding a reference string for creating synonym reference strings, e.g. by adding, removing or modifying prefixes and/or suffices, creating n-grams, pre-computing reference string features to be used in CA-score computation and/or PAP-score computation such as Buck Walter transliterations for cross linguistic name matching, Editex string equivalents, Double Metaphone string equivalent or the like.

The server application 811 is configured to access the database 808 and to perform a fast, fuzzy matching of the search string received in the transactional request with each of the millions of reference strings in the database in real time.

For example, the server application 811 can be a kind of watchdog application used by a financial institution as a protection against the creation of bank accounts for persons with a criminal record in respect to terrorism, international organized crime or money. The server application can be configured to execute the string-matching method according to anyone of the examples described herein, e.g. as described with reference to figure 1. The server application can comprise, for example, a string tokenizer module or function 816 configured to tokenize the search string and each of the reference strings into respective reference tokens. The server application can comprise a further modular function 818 configured to automatically create first and second alignment partners by concatenating two or more of the tokens provided by the tokenizer 816, by combining first and second alignment partners into candidate alignments, computing a CA-score for each of the candidate alignments and identifying, based on the CA-scores, an optimal alignment 250, 502 for each of the reference strings in respect to the received search string. A further function or module 820, referred herein as PAP-score computation module, computes one or more PAP-scores for each of the candidate alignments in the optimal alignment, but not for any one of the other candidate alignments. The PAP-scores of the one or more different PAP-score types are then aggregated across the totality of candidate alignments in the optimal alignments to provide aggregated PAP-scores. The aggregated PAP-scores and preferably also at least some of the individual PAP-scores, in particular the one of the PAP-scores having the minimum score value, are input to an identity prediction module or function 822, e.g. a trained machine learning software. The prediction program 822 predicts, based on the provided input data, a likelihood that the entities represented by the search string and the reference string are identical.

In some example implementations, the optional typology-based string matching steps 114-124 can be implemented in the client software and only the method part depicted in figure 1b is performed on the server. In other example implementations, also the typology-based string matching steps 114-124 can be performed by the server application.

The server application of the bank will create the requested bank account only in case the search string does not match with any one of the reference strings in the watchlist.

Depending on the implementation, the prediction result can be returned to the client computer system having submitted the request. In addition, or alternatively, the server application 811 can perform a function in dependence on the prediction result or cause another application on the same or a different computer system to perform this function. For example, in case the prediction results obtained for the reference strings in the database in respect to the received search string indicate that the search entity is not identical to anyone of the reference entities, the server application can send a response message indicating that the requested bank account has been or will be created. In addition, or alternatively, the server application can trigger the automated execution of the transaction or forward a message that the requested transaction can be performed to another computer in charge of performing the transaction (in this case: creating a bank account based on credentials read from an ID document). In case the prediction result obtained for one of the reference strings is that the search entity and the reference entity represented by this reference string are identical, the server application will send a warning message to the computer in charge of performing the transaction or will block the requested creation of a bank account.

While the CA-scores can be computed quickly and typically basically consist of one or more syntactic and/or phonetic similarity scores, the computation of the PAP-scores is computationally more demanding and preferably comprises also the computation of one or more semantic similarity scores in addition to syntactic and/or phonetic similarity scores. The computation of semantic similarity scores can be performed, for example, by evaluating the one or more attribute values 813 stored in the database in association with the respective reference strings. Some or all of the attribute values 813 of the reference strings may not be created manually, but rather may be created automatically by trained machine learning programs. These trained machine learning programs can also be used for dynamically computing/predicting the respective attribute values for the dynamically received search string. For example, the request for creating a target bank account owned by a person having the first name "Andrea" can comprise meta data being indicative of the language of the request and/or the nationality of the person having provided his or her ID-document. This information, in combination with a dictionary of language or country-specific first names for female and male persons may allow an automated prediction for some attribute types for the dynamically received search string. For example, a search token "Andrea" is indicative of a female person if the language or nationality of the owner of the target bank account is German, but is indicative of a male person if the nationality or language is Italian. Computing a semantic PAP-similarity score for candidate alignments of the optimal alignment, e.g. for the gender or for any other type of semantic attribute that may be of some predictive value in respect to the identity of the entities represented by the surgeon the reference strings, may ensure that the probability that two strings comprising "Andre" and "Andrew" will be considered to "match", i.e.,

represent the same entity, is much higher than for "Andrea" and "Andreas" although the syntactic and phonetic similarity score of these two pairs may be similar, because the first pair relates to the same semantic class in respect to e.g. the attribute gender while the second pair does not.

According to other examples, one or more attribute values 828, 830 can also be provided in association with the search string, whereby the attribute values 828, 830 are indicative of the semantic concept or an attribute of an entity represented by the search string.

According to some examples, the server application is configured to predict one or more attribute values in respect to predefined semantic categories for the entity represented by the received search string and/or extract these attribute values from additional data contained e.g. in the request or provided by other means. These categories can be, for example, gender, legal form, citizenship, country where the headquarter is registered, language in which the string is specified, date of birth, date of official registration of a legal person, etc. Then, these predicted or otherwise obtained attribute values are used as a filter for reducing the number of reference strings to be processed. For example, in case the person represented by the received search string is predicted, based on some features of the search tokens and some language information in the request, to be a female person having citizenship of a particular country C, then only those reference strings in the database 808 will be compared with the search string whose assigned attribute values 813 indicate that the entity represented by this reference string is also a female citizen of country C. The computation of the candidate alignments and the CA-scores is performed selectively for the filtered reference strings.

**Figure 9** depicts an example of the server computer system 804 having been implemented as a distributed access control system comprising a server computer system 900, e.g. in the form of a cloud service architecture. In order to be able to check resource access requests received from plurality of client computers 824, 802 against a watchlist 810 comprising about 4 million reference strings in real time, an index file 812 is which is accessed and shared by all the application servers 914, 916 of the distributed computer system 900 is created that can be used for further increasing performance.

According to examples of the system and method described herein, the list of reference strings is provided (typically in addition to the original reference strings in the database) in the form of one or more indices. According to preferred examples, the indices are a data structure comprising a searchable tree, wherein the nodes of the trees comprise n-grams of the reference strings. Thus the n-grams are used as index keys.

An "n-gram" as used herein is a contiguous sequence of n items from a given character sequence, e.g. a string or token.

This means that upon receiving a search string, all n-grams contained in the search string are automatically computed and the one or more indices are searched with the n-grams of the search string in order to identify a sub-set of the reference strings in the database which share at least one bi-gram with the search string ("filtering operation"). Only these subset of reference strings are used as basis for tokenizing the reference strings and computing CA- and PAP-scores and optimum alignments. Owing to this reduction of reference strings actually processed there is a significant performance gain.

In particular, the n-grams can be bi-grams. In this case, the one or more indices are bigrambased tree indices.

According to examples, the filtering step evaluates two or more criteria. For example, the reference strings can be used for computing a bi-gram based and a tri-gram based index and the filtering operation will select only those reference strings for further CA- and PAP score computation which share at least one bi-gram and at least one tri-gram with the search string.

In addition, or alternatively, the filtering operation will select only those reference strings for further CA- and PAP score computation which share at least one n-gram and which in addition have an edit distance in respect to the search string that is above or below a predefined threshold value.

According to preferred examples, two or more n-gram based indices are created by respectively combining the n-grams obtained for a particular, predefined token of a reference string. For example, a first n-gram based index can be created based on all n-grams of the "first name" token of all reference strings. A second n-gram based index can be created based on all n-grams of the "last name" token of all reference strings. For example, for "Andreas Smyth", the n-grams of the token "Andreas" are stored in the first index and the n-grams of the token "Smyth" are stored in the second index. The full string "Andreas Smyth" is not used directly for computing the n-grams. Then, given the search string "Andrea Smith", all n-grams, e.g. bigrams, contained in "Andrea" and "Smith" are determined separately, e.g. "an", "dr", "ea", for "Andrea" and " S", "mi" and so on for "Smith". Then, the first index is searched with all n-grams derived from the search token "Andrea" for identifying a first subset of reference strings sharing at least one n-gram in the "first name" token with the "first name" token of the search string. In addition, the second index is searched with all n-grams derived from the search token "Smith" for identifying a second subset of reference strings sharing at least one n-gram in the "last name" token with the "last name" token of the search string. The sub-set that is finally used for computing the CA- and PAP-scores is obtained by performing an INTERSECT operation of the first and second subset.

This file contains all the reference strings 810 of the database 808 hosted by the database server 904, whereby

In case a pre-processing of the reference strings is applied, the reference string index may comprise additional reference strings created by expanding the original reference strings in the database. This index 812 can optionally comprise in addition the semantic attributes 813 computed for the reference strings.

If the reference strings in the index 812 have been pre-processed, then also the search string 202 provided by one of the clients 802, 824 has to be pre-processed accordingly.

The search strings are received by the distributed system 100 via a front end server 908 comprising a client interface 910. The client interface is a network interface configured to receive one or more requests from one or more client computers via a network 826, e.g. the internet. Optionally, the front end server 908 can comprise a batch processing module 912 configured to collect a plurality of received search strings and to forward a batch of collected search strings to the one or more application servers 914, 916 for processing the search strings in batch mode. For example, different batches can be created for different clients in a "one batch per client-session" basis and/or for groups of search strings having been categorized by the server application 811 into different search string groups in accordance with predicted semantic attribute values of the entity represented by the received search string. For example, the predicted attribute values could be a data value being indicative of a predicted gender, nationality, legal status, year of birth, year of registration of an organization or the like. Processing the requests in a batch wise manner in accordance with dynamically predicted semantic attribute values of the search strings may be advantageous, because this may allow applying semantic filters on the reference strings in respect to the predicted attribute types, e.g. language, gender, nationality, etc., thereby reducing the number of reference strings to be evaluated.

Preferably, the distributed server computer system 900 makes use of a load balancing environment in which the requests are distributed to the individual application servers 914, 916 respectively hosting an instance of the server application 811, in a load balanced manner.

The applicant has observed that the system architecture depicted in figure 8 is able to process more than 40 simultaneous transactional requests, e.g. 60 requests with different search strings, against a watchlist of 5.000.000 reference strings, with an average of 1 second per request (and search string), on a standard computer used as the server computer. By using a cloud environment, the approach can be scaled to a much larger number of requests against a much larger reference string list without losing real-time capability.

The one or more software modules 814-822 can be stored on one or more storage media operatively coupled to any one of the application servers 914, 916. The software modules can be implemented as sub-modules or routines of a single monolithic server application 811 or can be implemented as separate stand-alone software programs which intraoperatively provide the functionality of a fuzzy string matching and the prediction of entity identity as described herein for example implementations. Hence, the distributed system 900 is adapted to receive one or more search strings from one or more client computers via a network and determine in real-time whether the search string(s) match with at least one of the reference strings in the database. Then, the results of the string matching and the prediction are returned to the client having submitted the respective search string. According to some examples, the client application 806 of the client computer is configured to display the received result of the fuzzy string matching to a user to whom the client device is assigned.

According to examples, the client application is configured to enable the user to enter a confirmation whether or not he or she considers the string matching result and/or the predicted entity identity result to be correct or not. The server application 811 is configured to receive the confirmation entered by the user from the client device. In case the user confirms the matching result and/or the prediction result, the server application can store the string matching result (e.g. in the form of the optimal alignment and all PAP-scores computed for the candidate alignments contained therein) and/or the prediction results in the database 808. If not, the server application may stop any ongoing entity identity prediction based on the currently examined optimal alignment, and may rather continue with analyzing the similarity of the search string with a next one of the reference strings.

**Figure 10** depicts another application scenario and document-based access control system architecture using the string matching method according to some example implementations. A computer system 850 referred herein as "watchdog computer system" comprises a string matching and prediction software 858 that is used as access control software and functionally corresponds to the server application 811 and is able to perform the string matching and prediction steps described herein for example implementations. The watchdog computer system can be, for example, a border control terminal.

In contrast to the server application 811, the software 858 does not receive the search string via a network from a client computer but rather receives the search string from a user 856 who directly interacts with the watchdog computer system by presenting his or her ID-document 866 comprising a name on the MRZ 868 or comprising a 2D code (e.g. bar code, matrix code) encoding credentials of the user. For example, the user can be prompted to present his or her ID document to the optical sensor 864 via a graphical user interface (GUI) 854. The software 858 comprises or is able to access a database comprising a list ("backlist") of reference strings, whereby the reference strings represent natural persons to which no access must be given to a sensitive and/or protected physical or virtual entity 860, e.g. some sensitive data, a particular room or building, or a software or hardware function. After having acquired and decoded the optical pattern on the document 866 to the application program 858 that performs a string matching method of the search string against the person names in the watchlist as described already for example implementations. The software application 858 determines whether the automatically acquired name of the user matches with one of the reference strings in the watchlist and predicts, based on the degree of similarity of the matching strings whether or not the user 856 is one of the persons comprised in the watchlist. The result of the prediction is forwarded to a decision software 852 that is configured to decide whether or not the user 856 should be granted access to the protected entity 860. If the forwarded decision indicates that the user 856 is a member of the watchlist, the decision software 852 will not grant the user access to the protected entity 860. If the forwarded decision indicates that the user is not mentioned on the watchlist, the decision software is configured to grant the user access to the entity 860 and/or perform additional checks in order to determine whether the user should be granted access.

Example Implementations where the string matching method is used in a watchdog application may have the advantage that a decision to grant or deny a user access to a particular sensitive or protected entity can be computed in real time even in case the watchlist should comprise many million entries and that the method is robust against errors during the acquisition and decoding of the optical pattern on the document. Hence, some examples are particularly useful in the context of security terminals used in airports or border crossings and in any other use case scenario associated with document-based access control.

Listofreferencenumerals

| | |
|---|---|
| 102-124 | steps |
| 200 | set of candidate alignments |
| 202 | search string |
| 204 | reference string |
| 206-226 | subsets of candidate alignments |
| 232-236 | search tokens |
| 238-240 | reference tokens |
| 250 | single candidate alignment identified as the optimal alignment |
| 300 | set of candidate alignments |
| 302, 304 | candidate alignments combined to form the optimal alignment |
| 502 | optimal alignment generated by combining two candidate alignments |
| 602 | syntactic PAP-score |
| 604 | phonetic PAP-score |
| 606 | semantic PAP-score |
| 702 | aggregate syntactic PAP-score |
| 704 | aggregate phonetic PAP-score |
| 706 | aggregate semantic PAP-score |
| 800 | distributed computer system |
| 802 | client computer system |
| 804 | server computer system |
| 806 | client application |
| 808 | database |
| 810 | reference strings |
| 811 | server application |
| 812 | reference string index |
| 813 | semantic attributes of entities |
| 814 | string pre-processing module |
| 816 | string tokenizer |
| 818 | candidate alignment creation and CA score computation module |
| 820 | PAP-score computation module |
| 822 | entity identity prediction module |
| 824 | client computer system |
| 826 | network |
| 828 | semantic attributes of search string |
| 830 | semantic attributes of search string |
| 850 | watchdog computer system |
| 852 | decision software |
| 854 | GUI |

| | |
|---|---|
| 856 | user |
| 858 | string matching & prediction software |
| 860 | protected data, place or function |
| 900 | distributed server computer system |
| 904 | database server |
| 906 | index server |
| 908 | front end server |
| 910 | interface for one or more client computers |
| 912 | batch processing module |
| 914 | multicore application server |
| 916 | multicore application server |

**Claims**

1. A computer-implemented document-based access control method performed by an access control system, comprising:

- providing (102) one or more reference strings (204, 810) respectively representing an entity referred to as reference entity;
- tokenizing (104) each of the reference strings into one or more reference tokens (238, 240);
- capturing (110) an optical pattern (868) by an optical sensor (864), the optical pattern being presented to the sensor on a document (866) assigned to an entity (856) referred to as requesting entity;
- decoding (111) the optical pattern to obtain a search string (202) representing the requesting entity (856);
- tokenizing (112) the search string into search tokens (232, 234, 236);
- creating (128) an extended set of search tokens consisting of a mixture of the search tokens and concatenated search tokens, each concatenated search token being created by concatenating two or more of the search tokens;
- for each of the reference strings, performing, until a match is found or until all reference strings have been traversed:

    • creating (127) an extended set of reference tokens consisting of a mixture of the reference tokens of the reference strings and concatenated reference tokens, each concatenated reference token being created by concatenating two or more of the reference tokens of the reference string;
    • creating (129) a set (200, 300) of candidate alignments, each candidate alignment aligning a first alignment partner selected from the extended set of search tokens with a second alignment partner selected from the extended set of reference tokens;
    • computing (130) a candidate-alignment score - CA score - for each of the candidate alignments created for the reference string, the CA score being indicative of a similarity of the first and second alignment partners;
    • identifying (132) one or more candidate alignments (250, {302, 304}) having the highest CA scores and which - if combined with each other - comprise the largest number of the search tokens but do not comprise any one of the search tokens twice, the identified one or more candidate alignments representing the optimum alignment of the search string and the reference string;
    • computing (134) an aggregated CA score from the CA scores of the identified optimum alignment;
    • selectively in case the aggregated CA score is above a CA score threshold, computing (136) one or more paired-alignment partner-scores - PAP-scores (602, 604, 604) for each of the candidate alignments in the optimum alignments, each PAP-score being indicative of the similarity of the first and second alignment partners in this candidate alignment, the PAP-scores providing a more exact indication of the similarity of paired alignment partners than the CA scores;
    • computing (140) a prediction score indicating a likelihood of the reference string representing the same entity as the search string as a function of the one or more PAP-scores of all candidate alignments in the optimum alignment;
    • if the prediction score is above a prediction threshold, returning (142) the reference string as a match; and

- granting the requesting entity (856) access to an access-controlled resource in dependence on the prediction score computed for the traversed reference strings, the resource being selected from a group comprising a software function, a hardware function, a service, a product, a place and a geographic region.

**2.** The computer-implemented method of claim 1,

   - the optical sensor being a camera and/or a 2D code reader; and/or
   - the optical pattern (868) being an alphanumerical character string, in particular an entity's name on an identity document (856), e.g. on a machine-readablezone, MRZ, or on a Visual Inspection Zone, VIZ, of the identity document, or a bar code or a matrix code; and/or
   - the decoding (111) of the optical pattern comprising an optical-character-recognition step (OCR-step), a bar-code-decoding step and/or a matrix-code-decoding step.

**3.** The computer-implemented method of any one of the previous claims,

   - the optical sensor being part of a terminal, the terminal being in particular a border control terminal, an airport security terminal, a check-in terminal for entering a room or a building or a computer system network, a card reading terminal, a smartphone, a point-of-sales terminal or a portable terminal for ID-document based authentication of an entity; and/or
   - the document being an ID card, a passport, an employee ID card, an insurance card, a credit card, a social security card, or any other document adapted to prove an identity of an entity.

**4.** The computer-implemented method of any one of the previous claims, the one or more PAP-scores being a plurality of PAP-scores of different PAP-score types, the method further comprising, for each of the reference strings:

   - for each of the plurality of PAP-score types, computing an aggregate PAP-score (702, 704, 706) as a function of all PAP-scores of the said PAP-score type computed for all candidate alignments in the optimum alignment;
   - the prediction whether the reference string represents the same entity as the search string being computed as a function of at least the aggregate PAP-scores of the plurality of PAP-score types.

**5.** The computer-implemented method of claim 4, the PAP-score types being selected from a group comprising:

   - a syntactical similarity score;
   - a phonetic similarity score;
   - a character-position-based similarity score;
   - a semantic similarity score;
   - n-gram-based similarity scores;
   - hash-based similarity scores;
   - a combination of two or more of the aforementioned similarity scores, wherein the combination can in particular be a mean, min, max and/or quartile of two or more of the aforementioned scores.

**6.** The computer-implemented method of any one of the previous claims, further comprising a prefilter-matching sub-method comprising:

   - identifying (114) at least one name typology for the search string and for each of the reference strings, the typology being selected from a group comprising: language, country and gender;
   - normalizing (116) the search string and each of the reference strings based on the at least one respectively identified name typology;
   - for each of the normalized reference strings:

      • computing (118) a prefilter score, PF-score, as a function of an alignment of the normalized search string with the normalized reference string;
      • in case the PF score is below a typology-specific rejection threshold, treating (122) the reference string as a non-matching string and skipping the steps (126-140) of computing candidate-alignments, CA-scores and PAP scores;
      • in case the prefilter score is above a typology-specific acceptance threshold, treating (124) the reference string as a matching string and skipping the steps (126-140) of computing candidate-alignments, CA-scores and PAP scores;
      • in case the prefilter score is above a rejection threshold and below the acceptance threshold, performing the steps (126-140) of computing candidate-alignments, CA-scores and PAP scores for determining if the search string matches the reference string.

**7.** The computer-implemented method of any one of the previous claims, further comprising:

- for each of the reference strings, computing a totality of n-grams contained in at least one of the reference tokens in the reference string; and storing the n-grams as index keys with a reference to the reference string in a searchable index, the index comprising the n-grams and additional data to be evaluated for CA score and/or PAP score computation;
- computing the totality of n-grams contained in each of the search tokens in the search string;
- using at least one of the n-grams of the search string as search key value for searching the index for identifying a sub-set of the reference strings in a database, the reference strings in the subset comprising at least one n-gram that is identical with an n-gram created from the search string;
- wherein the creation of the candidate alignments, the computing of the CA score, the creation of the optimum alignment, the computing of the PAP-scores and the prediction is performed selectively for reference strings contained in the subset of reference strings.

**8.** The computer-implemented method of any one of the previous claims:

- wherein the creation of the extended set of search tokens comprises:

  • automatically creating a totality of combinatorically possible combinations of two or more of the search tokens;
  • concatenating each of the created combinations to form one of the concatenated search tokens used as one of the first alignment partners; and/or

- wherein the creation of the extended set of reference tokens comprises:

  • automatically creating a totality of combinatorically possible combinations of two or more of the reference tokens;
  • concatenating each of the created combinations to form one of the concatenated reference tokens used as one of the second alignment partners.

**9.** The computer-implemented method of claim 8, the automated creation of the plurality of combinatorically possible combinations of two or more of the search or reference tokens being performed such that an original order of the tokens in the respective string has no impact on token combination, whereby one or more of the first and/or second alignment partners are created by concatenating tokens in accordance with the original order of said tokens in their respective source string and one or more other ones of the first and/or second alignment partners are created by concatenating tokens in a different order than the original order of said tokens in their respective source string.

**10.** The computer-implemented method of any one of claims 8-9, the automated creation of the plurality of combinatorically possible combinations of two or more of the search or reference tokens being performed such that only tokens lying adjacent to each other in the respective string are combined.

**11.** The computer-implemented method of any one of claims 8-10,

- the automated creation of the plurality of combinatorically possible combinations of the two or more of the search tokens being performed such that the maximum number of the search tokens combined to form a concatenated search token is below 4, preferably below 3 of the search tokens; and/or
- the automated creation of the plurality of combinatorically possible combinations of the two or more of the reference tokens being performed such that the maximum number of the reference tokens combined to form a concatenated reference token is below 4, preferably below 3 of the reference tokens.

**12.** The computer-implemented method of any one of the previous claims, the CA score being selected from a group comprising:

- a syntactical similarity score;
- a phonetic similarity score;
- n-gram-based similarity scores;
- omitted characters-based similarity scores;
- a semantic similarity score;

- a combination of two or more of the aforementioned similarity scores, wherein the combination can in particular be a mean, min, max and/or quartile of two or more of the aforementioned token-based combination algorithms.

13. The computer-implemented method of any one of the previous claims,

- the method being implemented in a terminal being operatively coupled with the optical sensor and/or
- the method being implemented in a client-server architecture wherein a client application is instantiated in the terminal and a server application is instantiated on a server computer connected to the terminal via a network, the client application being configured for obtaining the search string and sending the search string to the server application, wherein the server application is configured to perform the creation and alignment of the alignment partners, the CA scores, PAP scores and the prediction score and to return a result whether or not at least one matching reference string was found for the search string and wherein the client application is configured to grant or deny access.

14. The computer-implemented method of any one of the previous claims, the method being a real-time method configured for granting or denying access in real time and/or being repeated automatically for repeatedly verifying if the requesting entity should be allowed to access the resource.

15. An access control system (800, 850) comprising:

- a volatile or non-volatile data store (808) comprising one or more reference strings (204, 810), each reference string representing an entity referred to as reference entity;
- an optical sensor (864) configured to capture (110) an optical pattern (868) presented to the sensor on a document (866) assigned to an entity (856) referred to as requesting entity;
- a distributed or monolithic data processing system (800, 850, {900, 824}, {900, 802}) configured for:

  • tokenizing (104) each of the reference strings into one or more reference tokens (238, 240);
  • decoding (111) the optical pattern to obtain a search string (202) representing the requesting entity (856);
  • tokenizing (112) the search string into search tokens (232, 234, 236);
  • creating (113) an extended set of search tokens consisting of a mixture of the search tokens and concatenated search tokens, each concatenated search token being created by concatenating two or more of the search tokens;
  • for each of the reference strings, performing, until a match is found or all reference strings have been traversed:

    o creating (128) an extended set of reference tokens consisting of a mixture of the reference tokens of the reference strings and concatenated reference tokens, each concatenated reference token being created by concatenating two or more of the reference tokens of the reference string;
    o creating (129) a set (200, 300) of candidate alignments, each candidate alignment aligning a first alignment partner selected from the extended set of search tokens with a second alignment partner selected from the extended set of reference tokens;
    o computing (130) a candidate-alignment score - CA score - for each of the candidate alignments created for the reference string, the CA score being indicative of a similarity of the first and second alignment partners;
    o identifying (132) one or more candidate alignments (250, {302, 304}) having the highest CA scores and which - if combined with each other - comprise the largest number of the search tokens but do not comprise any one of the search tokens twice, the identified one or more candidate alignments representing the optimum alignment of the search string and the reference string;
    o computing (134) an aggregated CA score from the CA scores of the identified optimum alignment;
    o selectively in case the aggregated CA score is above a CA score threshold, computing (136) one or more paired-alignment partner-scores - PAP-scores (602, 604, 604) for each of the candidate alignments in the optimum alignments, each PAP-score being indicative of the similarity of the first and second alignment partners in this candidate alignment, the PAP-scores providing a more exact indication of the similarity of paired alignment partners than the CA scores;
    o computing (140) a prediction score indicating a likelihood of the reference string representing the same entity as the search string as a function of the one or more PAP-scores of all candidate alignments in the optimum alignment;
    o if the prediction score is above a prediction threshold, returning (142) the reference string as a match;

and

    o granting the requesting entity (856) access to an access-controlled resource in dependence on the prediction score computed for the traversed reference strings, the resource being selected from a group comprising a software function, a hardware function, a service, a product, a lace and a geographic region.

**Patentansprüche**

1. Computerimplementiertes, dokumentenbasiertes Zugangskontrollverfahren, das von einem Zugangskontrollsystem durchgeführt wird, umfassend:

    - Bereitstellen (102) einer oder mehrerer Referenzzeichenfolgen (204, 810), die jeweils eine Entität repräsentieren, die als Referenzentität bezeichnet wird;
    - Zerlegen (104) jeder einzelnen von den Referenzzeichenfolgen in ein oder mehrere Referenztokens (238, 240);
    - Erfassen (110) eines optischen Musters (868) durch einen optischen Sensor (864), wobei das optische Muster dem Sensor auf einem Dokument (866) präsentiert wird, das einer als anfragende Entität bezeichneten Entität (856) zugeordnet ist;
    - Decodieren (111) des optischen Musters, um eine Suchzeichenfolge (202) zu erhalten, welche die anfragende Entität (856) repräsentiert;
    - Zerlegen (112) der Suchzeichenfolge in Suchtokens (232, 234, 236);
    - Erzeugen (128) eines erweiterten Satzes von Suchtokens, der eine Mischung aus den Suchtokens und konkatenierten Suchtokens umfasst, wobei jedes konkatenierte Suchtoken durch Konkatenieren von zwei oder mehr von den Suchtokens erzeugt wird;
    - für jede von den Referenzzeichenfolgen und bis eine Übereinstimmung gefunden wird oder bis alle Referenzzeichenfolgen durchlaufen wurden:

        • Erzeugen (127) eines erweiterten Satzes von Referenztokens, der eine Mischung aus den Referenztokens aus den Referenzzeichenfolgen und konkatenierten Referenztokens umfasst, wobei jedes konkatenierte Referenztoken durch Konkatenieren von zwei oder mehr von den Referenztokens aus der Referenzzeichenfolge erzeugt wird;
        • Erzeugen (129) eines Satzes (200, 300) aus in Betracht gezogenen Ausrichtungen, wobei jede in Betracht gezogene Ausrichtung einen ersten, aus dem erweiterten Satz von Suchtokens ausgewählten Ausrichtungspartner und einen zweiten, aus dem erweiterten Satz von Referenztokens ausgewählten Ausrichtungspartner aneinander ausrichtet;
        • Berechnen (130) einer Ausrichtungskandidatenbewertungsziffer - einen CA-Score - für jede von den in Betracht gezogenen Ausrichtungen, die für die Referenzzeichenfolge erzeugt werden, wobei der CA-Score eine Ähnlichkeit des ersten und des zweiten Ausrichtungspartners angibt;
        • Identifizieren (132) einer oder mehrerer in Betracht gezogener Ausrichtungen (250, {302, 304}), die die höchsten CA-Scores aufweisen und die - wenn sie miteinander kombiniert werden - die höchste Anzahl an Suchtokens umfassen, aber keines von den Suchtokens zweimal umfassen, wobei die optimale Ausrichtung der Suchzeichenfolge und der Referenzzeichenfolge von der einen oder den mehreren identifizierten von den in Betracht gezogenen Ausrichtungen repräsentiert wird;
        • Berechnen (134) eines aggregierten CA-Score aus den CA-Scores der identifizierten optimalen Ausrichtung;
        • falls der aggregierte CA-Score über einem CA-Score-Schwellenwert liegt: selektiv Berechnen (136) eines oder mehrerer Ausrichtungspartnerpaarungs-Scores - PAP-Scores (602, 604, 604) für jede der in Betracht gezogenen Ausrichtungen von den optimalen Ausrichtungen, wobei jeder PAP-Score die Ähnlichkeit des ersten und des zweiten Ausrichtungspartners in dieser in Betracht gezogenen Ausrichtung angibt, wobei die PAP-Scores eine exaktere Angabe der Ähnlichkeit von gepaarten Ausrichtungspartnern angeben als die CA-Scores;
        • Berechnen (140) eines Voraussage-Scores, der eine Wahrscheinlichkeit dafür angibt, dass die Referenzzeichenfolge dieselbe Entität repräsentiert wie die Suchzeichenfolge, als Funktion des einen oder der mehreren PAP-Scores sämtlicher in Betracht gezogener Ausrichtungen von der optimalen Ausrichtung;
        • falls der Voraussage-Score über einem Voraussage-Schwellenwert liegt: Zurückmelden (142) der Referenzzeichenfolge als Match; und

    - Gewähren eines Zugangs zu einer zugangskontrollierten Ressource für die anfragende Entität (856) in Abhängigkeit von dem für die durchlaufenen Bezugszeichenfolgen berechneten Voraussage-Score, wobei die Ressource ausgewählt wird aus einer Gruppe, die eine Software-Funktion, eine Hardware-Funktion, eine Dienstleistung, ein Produkt, einen Ort und eine geografische Region umfasst.

2. Computerimplementiertes Verfahren nach Anspruch 1,

- wobei der optische Sensor eine Kamera und/oder ein 2D-Code-Leser ist; und/oder
- wobei es sich bei dem optischen Muster (868) um Folgendes handelt: eine alphanumerische Zeichenfolge, insbesondere einen Namen einer Entität auf einem Ausweisdokument (856), z.B. auf einer maschinenlesbaren Zone, MRZ, oder auf einer Sichtprüfungszone, VIZ, des Ausweisdokuments, oder einen Strichcode oder einen Matrixcode; und/oder
- wobei das Decodieren (111) des optischen Musters einen Schritt des Erkennens optischer Zeichen (OCR-Schritt), einen Strichcode-Decodierungsschritt und/oder einen Matrixcode-Decodierungsschritt umfasst.

3. Computerimplementiertes Verfahren nach einem der vorangehenden Ansprüche,

- wobei der optische Sensor Teil eines Terminals ist, wobei es sich bei dem Terminal insbesondere um Folgendes handelt: ein Grenzkontrollterminal, ein Flughafensicherheitsterminal, ein Anmeldeterminal, das für einen Zutritt zu einem Raum oder einem Gebäude oder einem Computersystemnetz erforderlich ist, ein Kartenleseterminal, ein Smartphone, ein Kassenterminal oder ein tragbares Terminal für eine auf ID-Dokumenten basierende Authentifizierung einer Entität; und/oder
- wobei das Dokument eine ID-Karte, ein Reisepass, eine Mitarbeiter-ID-Karte, eine Versicherungskarte, eine Kreditkarte, eine Sozialversicherungskarte oder irgendein anderes Dokument ist, das geeignet ist, eine Identität einer Entität zu beweisen.

4. Computerimplementiertes Verfahren nach einem der vorangehenden Ansprüche, wobei es sich bei dem einen oder den mehreren PAP-Scores um eine Mehrzahl von PAP-Scores unterschiedlicher PAP-Score-Typen handelt, wobei das Verfahren für jede von den Referenzzeichenfolgen ferner umfasst:

- Berechnen eines aggregierten PAP-Score (702, 704, 706) für jeden von der Mehrzahl von PAP-Score-Typen als Funktion aller PAP-Scores des jeweiligen PAP-Score-Typs, der für alle in Betracht gezogenen Ausrichtungen von der optimalen Ausrichtung berechnet wird;
- wobei die Voraussage, ob die Referenzzeichenfolge dieselbe Entität repräsentiert wie die Suchzeichenfolge, als Funktion von zumindest den aggregierten PAP-Scores von der Mehrzahl von PAP-Score-Typen berechnet wird.

5. Computerimplementiertes Verfahren nach Anspruch 4, wobei die PAP-Score-Typen ausgewählt werden aus einer Gruppe, die umfasst:

- einen Syntaxähnlichkeits-Score;
- einen Phonetikähnlichkeits-Score;
- einen auf Zeichenpositionen basierenden Ähnlichkeits-Score;
- einen Semantikähnlichkeits-Score;
- auf N-Gramm basierende Ähnlichkeits-Scores;
- auf Hash basierende Ähnlichkeits-Scores;
- eine Kombination aus zwei oder mehr von den oben genannten Ähnlichkeits-Scores, wobei die Kombination insbesondere ein Mittelwert, Minimum, Maximum und/oder Quartil von zwei oder mehr der oben genannten Scores sein kann.

6. Computerimplementiertes Verfahren nach einem der vorangehenden Ansprüche, ferner ein Vorfilterungsabgleichs-Unterverfahren umfassend, das umfasst:

- Identifizieren (114) mindestens einer Namenstypologie für die Suchzeichenfolge und für jede von den Referenzzeichenfolgen, wobei die Typologie ausgewählt wird aus einer Gruppe, die umfasst: Sprache, Land und Geschlecht;
- Normalisieren (116) der Suchzeichenfolge und jeder der Referenzzeichenfolgen auf Basis der mindestens einen jeweils identifizierten Namenstypologie;
- für jede von den normalisierten Referenzzeichenfolgen:

• Berechnen (118) eines Vorfilterungs-Score, PF-Score, als Funktion einer gegenseitigen Ausrichtung der normalisierten Suchzeichenfolge und der normalisierten Referenzzeichenfolge;

• für den Fall, dass der PF-Score unter einem typologiespezifischen Zurückweisungsschwellenwert liegt: Behandeln (122) der Referenzzeichenfolge als nicht-übereinstimmende Zeichenfolge und Überspringen der Schritte (126-140) des Berechnens von in Betracht gezogenen Ausrichtungen, CA-Scores und PAP-Scores;

• für den Fall, dass der PF-Score über einem typologiespezifischen Akzeptanzschwellenwert liegt: Behandeln (124) der Referenzzeichenfolge als übereinstimmende Zeichenfolge und Überspringen der Schritte (126-140) des Berechnens von in Betracht gezogenen Ausrichtungen, CA-Scores und PAP-Scores,

• für den Fall, dass der Vorfilterungs-Score über einem Zurückweisungsschwellenwert und unter dem Akzeptanzschwellenwert liegt: Durchführen der Schritte (126-140) des Berechnens von in Betracht gezogenen Ausrichtungen, CA-Scores und PAP-Scores zum Bestimmen, ob die Suchzeichenfolge mit der Referenzzeichenfolge übereinstimmt.

7. Computerimplementiertes Verfahren nach einem der vorangehenden Ansprüche, ferner umfassend:

- für jede von den Referenzzeichenfolgen: Berechnen einer Gesamtheit der N-Gramms, die in mindestens einem der Referenztokens in der Referenzzeichenfolge enthalten sind; und Speichern der N-Gramms als Indexschlüssel mit einem Verweis auf die Referenzzeichenfolge in einem durchsuchbaren Index, wobei der Index die N-Gramms und zusätzliche Daten umfasst, die bei einer Berechnung des CA-Score und/oder des PAP-Score zu evaluieren sind;

- Berechnen der Gesamtheit der N-Gramms, die in jedem von den Suchtokens in der Suchzeichenfolge enthalten sind;

- Verwenden von mindestens einem von den N-Gramms der Suchzeichenfolge als Suchschlüsselwert zum Durchsuchen des Index zum Identifizieren eines Untersatzes der Referenzzeichenfolgen in einer Datenbank, wobei die Referenzzeichenfolgen in dem Untersatz mindestens ein N-Gramm umfassen, das mit einem aus der Suchzeichenfolge erzeugten N-Gramm identisch ist;

- wobei das Erzeugen der in Betracht gezogenen Ausrichtungen, das Berechnen des CA-Score, das Erzeugen der optimalen Ausrichtung, das Berechnen der PAP-Scores und das Voraussagen selektiv für in dem Untersatz von Referenzzeichenfolgen enthaltenen Referenzzeichenfolgen durchgeführt werden.

8. Computerimplementiertes Verfahren nach einem der vorangehenden Ansprüche:

- wobei das Erzeugen des erweiterten Satzes von Suchtokens umfasst:

• automatisch Erzeugen einer Gesamtheit von kombinatorisch möglichen Kombinationen von zwei oder mehr von den Suchtokens;

• Konkatenieren von jeder der erzeugten Kombinationen, um eines von den konkatenierten Suchtokens zu bilden, die als einer von den ersten Ausrichtungspartnern verwendet werden, und/oder

- wobei das Erzeugen des erweiterten Satzes von Referenztokens umfasst:

• automatisches Erzeugen einer Gesamtheit von kombinatorisch möglichen Kombinationen von zwei oder mehr von den Referenztokens;

• Konkatenieren von jeder der erzeugten Kombinationen, um eines von den konkatenierten Referenztokens zu bilden, das als einer von den zweiten Ausrichtungspartnern verwendet wird.

9. Computerimplementiertes Verfahren nach Anspruch 8, wobei das automatische Erzeugen der Mehrzahl von kombinatorisch möglichen Kombinationen von zwei oder mehr von den Such- oder Referenztokens so durchgeführt wird, dass eine ursprüngliche Reihenfolge der Tokens in der jeweiligen Zeichenfolge keinen Einfluss auf eine Tokenkombination hat, wobei einer oder mehrere von den ersten und/oder zweiten Ausrichtungspartnern durch Konkatenieren von Tokens gemäß der ursprünglichen Reihenfolge der Tokens in ihrer jeweiligen Quellzeichenfolge erzeugt wird bzw. werden und einer oder mehrere andere von den ersten und zweiten Ausrichtungspartnern durch Konkatenieren von Tokens in einer anderen Reihenfolge als die ursprüngliche Reihenfolge der Tokens in ihrer jeweiligen Quellreihenfolge erzeugt wird bzw. werden.

10. Computerimplementiertes Verfahren nach einem der Ansprüche 8-9, wobei das automatische Erzeugen der Mehrzahl von kombinatorisch möglichen Kombinationen von zwei oder mehr von den Such- oder Referenztokens so durchgeführt wird, dass nur Tokens, die in der jeweiligen Zeichenfolge nebeneinander liegen, kombiniert werden.

11. Computerimplementiertes Verfahren nach einem der Ansprüche 8-10,

- wobei das automatische Erzeugen der Mehrzahl von kombinatorisch möglichen Kombinationen der zwei oder mehr von den Suchtokens so durchgeführt wird, dass die maximale Anzahl der Suchtokens, die kombiniert werden, um ein konkateniertes Suchtoken zu bilden, unter 4, vorzugsweise unter 3 von den Suchtokens liegt; und/oder
- das automatische Erzeugen der Mehrzahl von kombinatorisch möglichen Kombinationen von zwei oder mehr der Referenztokens so durchgeführt wird, dass die maximale Anzahl der Referenztokens, die kombiniert werden, um ein konkateniertes Referenztoken zu bilden, unter 4, vorzugsweise unter 3 von den Referenztokens liegt.

12. Computerimplementiertes Verfahren nach einem der vorangehenden Ansprüche, wobei der CA-Score ausgewählt wird aus einer Gruppe, die umfasst:

- einen Syntaxähnlichkeits-Score;
- einen Phonetikähnlichkeits-Score;
- auf N-Gramm basierende Ähnlichkeits-Scores;
- auf weggelassenen Zeichen basierende Ähnlichkeits-Scores;
- einen Semantikähnlichkeits-Score;
- eine Kombination aus zwei oder mehr von den oben genannten Ähnlichkeits-Scores, wobei die Kombination insbesondere ein Mittelwert, Minimum, Maximum und/oder Quartil von zwei oder mehr von den oben genannten, auf Tokens basierenden Kombinationsalgorithmen sein kann.

13. Computerimplementiertes Verfahren nach einem der vorangehenden Ansprüche,

- wobei das Verfahren in einem Terminal implementiert wird, der funktionsmäßig mit dem optischen Sensor gekoppelt ist, und/oder
- das Verfahren in einer Client-Server-Architektur implementiert wird, wobei eine Client-Anwendung in dem Terminal instanziiert ist und eine Server-Anwendung an einem über ein Netz mit dem Terminal verbundenen Server-Computer instanziiert ist, wobei die Client-Anwendung eingerichtet ist, die Suchzeichenfolge zu ermitteln und die Suchzeichenfolge an die Server-Anwendung zu senden, wobei die Server-Anwendung eingerichtet ist, das Erzeugen und das Ausrichten der Ausrichtungspartner, der CA-Scores, der PAP-Scores und des Voraussage-Score durchzuführen und ein Ergebnis zurückzumelden, ob oder ob nicht eine übereinstimmende Referenzzeichenfolge für die Suchzeichenfolge gefunden wurde, und wobei die Client-Anwendung eingerichtet ist, einen Zugang zu gewähren oder zu verweigern.

14. Computerimplementiertes Verfahren nach einem der vorangehenden Ansprüche, wobei das Verfahren ein Echtzeitverfahren ist, das eingerichtet ist, einen Zugang in Echtzeit zu gewähren oder zu verweigern, und/oder automatisch wiederholt wird, um wiederholt zu verifizieren, ob der anfragenden Entität ein Zugang zu der Ressource gewährt werden soll.

15. Zugangskontrollsystem (800, 850), umfassend:

- einen flüchtigen oder nicht-flüchtigen Datenspeicher (808), der eine oder mehrere Referenzzeichenfolgen (204, 810) umfasst, wobei jede Referenzzeichenfolge eine Entität repräsentiert, die als Referenzentität bezeichnet wird;
- einen optischen Sensor (864), der eingerichtet ist, ein optisches Muster (868) zu erfassen (110), das dem Sensor auf einem Dokument (866) präsentiert wird, das einer als anfragende Entität bezeichneten Entität (856) zugeordnet ist;
- ein verteiltes oder monolithisches Datenverarbeitungssystem (800, 850, {900, 824}, {900, 802}), das eingerichtet ist zum:

  • Zerlegen (104) von jeder der Referenzzeichenfolgen in ein oder mehrere Referenztokens (238, 240);
  • Decodieren (111) des optischen Musters, um eine Suchzeichenfolge (202) zu erhalten, welche die anfragende Entität (856) repräsentiert;
  • Zerlegen (112) der Suchzeichenfolge in Suchtokens (232, 234, 236);
  • Erzeugen (113) eines erweiterten Satzes von Suchtokens, der von einer Mischung aus den Suchtokens und konkatenierten Suchtokens gebildet wird, wobei jedes konkatenierte Suchtoken durch Konkatenieren von zwei oder mehr von den Suchtokens erzeugt wird;

• für jede von den Referenzzeichenfolgen und bis eine Übereinstimmung gefunden wird oder alle Referenzzeichenfolgen durchlaufen wurden:

o Erzeugen (128) eines erweiterten Satzes von Referenztokens, der eine Mischung aus den Referenztokens aus den Referenzzeichenfolgen und konkatenierten Referenztokens umfasst, wobei jedes konkatenierte Referenztoken durch Konkatenieren von zwei oder mehr von den Referenztokens aus der Referenzzeichenfolge erzeugt wird;

o Erzeugen (9) eines Satzes (200, 300) aus in Betracht gezogenen Ausrichtungen, wobei jede in Betracht gezogene Ausrichtung einen ersten Ausrichtungspartner, der aus dem erweiterten Satz von Suchtokens ausgewählt wird, und einen zweiten Ausrichtungspartner, der aus dem erweiterten Satz von Referenztokens ausgewählt wird, aneinander ausrichtet;

o Berechnen (130) eines Ausrichtungskandidaten-Score - CA-Score - für jede von den in Betracht gezogenen Ausrichtungen, die für die Referenzzeichenfolge erzeugt werden, wobei der CA-Score eine Ähnlichkeit der ersten und der zweiten Ausrichtungspartner angibt;

o Identifizieren (132) einer oder mehrerer in Betracht gezogener Ausrichtungen (250, {302, 304}), die die höchsten CA-Scores aufweisen und die - wenn sie miteinander kombiniert werden - die höchste Anzahl an Suchtokens umfassen, aber keines von den Suchtokens zweimal umfassen, wobei die optimale Ausrichtung der Suchzeichenfolge und der Referenzzeichenfolge von der einen oder den mehreren identifizierten der in Betracht gezogenen Ausrichtungen repräsentiert wird;

o Berechnen (134) eines aggregierten CA-Score aus den CA-Scores der identifizierten optimalen Ausrichtung;

o falls der aggregierte CA-Score über einem CA-Score-Schwellenwert liegt: selektiv Berechnen (136) eines oder mehrerer Ausrichtungspartnerpaarungs-Scores - PAP-Scores (602, 604, 604) für jede der in Betracht gezogenen Ausrichtungen von den optimalen Ausrichtungen, wobei jeder PAP-Score die Ähnlichkeit des ersten und des zweiten Ausrichtungspartners in dieser in Betracht gezogenen Ausrichtung angibt, wobei die PAP-Scores eine exaktere Angabe der Ähnlichkeit von gepaarten Ausrichtungspartnern angeben als die CA-Scores;

o Berechnen (140) eines Voraussage-Score, der eine Wahrscheinlichkeit dafür angibt, dass die Referenzzeichenfolge dieselbe Entität repräsentiert wie die Suchzeichenfolge, als Funktion des einen oder der mehreren PAP-Scores sämtlicher in Betracht gezogener Ausrichtungen von der optimalen Ausrichtung;

o falls der Voraussage-Score über einem Voraussage-Schwellenwert liegt: Zurückmelden (142) der Referenzzeichenfolge als Match; und

o Gewähren eines Zugangs zu einer zugangskontrollierten Ressource für die anfragende Entität (856) in Abhängigkeit von dem für die durchlaufenen Referenzzeichenfolgen berechneten Voraussage-Score, wobei die Ressource ausgewählt wird aus einer Gruppe, die eine Software-Funktion, eine Hardware-Funktion, eine Dienstleistung, ein Produkt, einen Ort und eine geografische Region umfasst.

## Revendications

1. Procédé de contrôle d'accès basé sur document mis en oeuvre par ordinateur réalisé par un système de contrôle d'accès, comprenant :

- la fourniture (102) d'une ou de plusieurs chaînes de référence (204, 810) représentant respectivement une entité appelée entité de référence ;
- la tokénisation (104) de chacune des chaînes de référence en un ou plusieurs jetons de référence (238, 240) ;
- la capture (110) d'un motif optique (868) par un capteur optique (864), le motif optique étant présenté au capteur sur un document (866) attribué à une entité (856) appelée entité requérante ;
- le décodage (111) du motif optique pour obtenir une chaîne de recherche (202) représentant l'entité requérante (856) ;
- la tokénisation (112) de la chaîne de recherche en jetons de recherche (232, 234, 236) ;
- la création (128) d'un ensemble étendu de jetons de recherche constitué d'un mélange des jetons de recherche et de jetons de recherche concaténés, chaque jeton de recherche concaténé étant créé par concaténation de deux des jetons de recherche ou plus ;
- pour chacune des chaînes de référence, la réalisation, jusqu'à ce qu'une correspondance soit trouvée ou jusqu'à ce que toutes les chaînes de référence aient été traversées :

• la création (127) d'un ensemble étendu de jetons de référence constitué d'un mélange des jetons de référence et de jetons de référence concaténés, chaque jeton de référence concaténé étant créé par concaténation de deux des jetons de référence de la chaîne de référence ou plus ;

• la création (129) d'un ensemble (200, 300) d'alignements candidats, chaque alignement candidat alignant un premier partenaire d'alignement choisi dans l'ensemble étendu de jetons de recherche avec un second partenaire d'alignement choisi dans l'ensemble étendu de jetons de référence ;

• le calcul (130) d'un score d'alignement candidat - score d'AC - pour chacun des alignements candidats créés pour la chaîne de référence, le score d'AC indiquant une similitude des premier et second partenaires d'alignement ;

• l'identification (132) d'un ou de plusieurs alignements candidats (250, {302, 304}) ayant les scores d'AC les plus élevés et qui - s'ils sont combinés les uns aux autres - comprennent le plus grand nombre des jetons de recherche mais ne comprennent aucun des jetons de recherche individuels deux fois, les un ou plusieurs alignements candidats identifiés représentant l'alignement optimal de la chaîne de recherche et de la chaîne de référence ;

• le calcul (134) d'un score d'AC agrégé à partir des scores d'AC de l'alignement optimal identifié ;

• sélectivement dans le cas où le score d'AC agrégé est au-dessus d'un seuil de score d'AC, le calcul (136) d'un ou de plusieurs scores de partenaires d'alignements appariés - scores de PAP (602, 604, 604) pour chacun des alignements candidats dans les alignements optimaux, chaque score de PAP indiquant la similitude des premier et second partenaires d'alignement dans cet alignement candidat, les scores de PAP fournissant une indication plus exacte de la similitude des partenaires d'alignement appariés que les scores d'AC ;

• le calcul (140) d'un score de prédiction indiquant une probabilité que la chaîne de référence représente la même entité que la chaîne de référence en tant que fonction du ou des scores de PAP de tous les alignements candidats dans l'alignement optimal ;

• si le score de prédiction est supérieur à un seuil de prédiction, le renvoi (142) de la chaîne de référence comme correspondance ; et

- l'accord de l'accès de l'entité requérante (856) à une ressource à contrôle d'accès en fonction du score de prédiction calculé pour les chaînes de référence traversées, la ressource étant choisie dans un groupe comprenant une fonction logicielle, une fonction matérielle, un service, un produit, un emplacement et une région géographique.

2. Procédé mis en oeuvre par ordinateur selon la revendication 1,

- le capteur optique étant une caméra et/ou un lecteur de code 2D ; et/ou
- le motif optique (868) étant une chaîne de caractères alphanumériques, en particulier le nom d'une entité sur un document d'identité (856), p. ex. sur une zone lisible par machine, ZLM, ou sur une zone d'inspection visuelle, ZIV, du document d'identité, ou un code-barres ou un code matriciel ; et/ou
- le décodage (111) du motif optique comprenant une étape de reconnaissance optique de caractères (étape d'OCR), une étape de décodage de code-barres et/ou une étape de décodage de code matriciel.

3. Procédé mis en oeuvre par ordinateur selon l'une quelconque des revendications précédentes,

- le capteur optique faisant partie d'un terminal, le terminal étant en particulier un terminal de contrôle aux frontières, un terminal de sécurité aéroportuaire, un terminal d'enregistrement pour l'entrée dans une pièce ou un bâtiment ou un réseau de système informatique, un terminal de lecture de carte, un smartphone, un terminal de point de vente ou un terminal portatif pour une authentification basée sur document d'ID d'une entité ; et/ou
- le document étant une carte d'ID, un passeport, une carte d'ID d'employé, une carte d'assurance, une carte de crédit, une carte de sécurité sociale, ou n'importe quel autre document adapté pour prouver l'identité d'une entité.

4. Procédé mis en oeuvre par ordinateur selon l'une quelconque des revendications précédentes, le ou les scores de PAP étant une pluralité de scores de PAP de types de score de PAP différents, le procédé comprenant en outre, pour chacune des chaînes de référence :

- pour chacun de la pluralité de types de score de PAP, le calcul d'un score de PAP agrégé (702, 704, 706) en tant que fonction de tous les scores de PAP dudit type de score de PAP calculé pour tous les alignements candidats dans l'alignement optimal ;
- la prédiction si la chaîne de référence représente la même entité que la chaîne de recherche calculée en fonction d'au moins les scores de PAP agrégés de la pluralité des types de score de PAP.

**5.** Procédé mis en oeuvre par ordinateur selon la revendication 4, les types de score de PAP étant choisis dans un groupe comprenant :

- un score de similitude syntactique ;
- un score de similitude phonétique ;
- un score de similitude basé sur la position des caractères ;
- un score de similitude sémantique ;
- des scores de similitude basés sur un n-gramme ;
- des scores de similitude basés sur un hachage ;
- une combinaison de deux des scores de similitude susmentionnés ou plus, dans lequel la combinaison peut en particulier être une moyenne, un minimum, un maximum et/ou un quartile de deux des scores susmentionnés ou plus.

**6.** Procédé mis en oeuvre par ordinateur selon l'une quelconque des revendications précédentes, comprenant en outre un sous-procédé de correspondance de préfiltre comprenant :

- l'identification (114) d'au moins une typologie de nom pour la chaîne de recherche et pour chacune des chaînes de référence, la typologie étant choisie dans un groupe comprenant : la langue, le pays et le sexe ;
- la normalisation (116) de la chaîne de recherche et de chacune des chaînes de référence en se basant sur l'au moins une typologie de nom respectivement identifiée ;
- pour chacune des chaînes de référence normalisées :

  • le calcul (118) d'un score de préfiltre, ou score de PF, en tant que fonction d'un alignement de la chaîne de recherche normalisée avec la chaîne de référence normalisée ;
  • dans le cas où le score de PF est inférieur à un seuil de rejet spécifique d'une typologie, le traitement (122) de la chaîne de référence en tant que chaîne non correspondante et l'omission des étapes (126 à 140) de calcul des alignements candidats, des scores d'AC et des scores de PAP ;
  • dans le cas où le score de préfiltre est supérieur à un seuil d'acceptation spécifique d'une typologie, le traitement (124) de la chaîne de référence en tant que chaîne correspondante et l'omission des étapes (126 à 140) de calcul des alignements candidats, des scores d'AC et des scores de PAP ;
  • dans le cas où le score de préfiltre est supérieur à un seuil de rejet et inférieur au seuil d'acceptation, la réalisation des étapes (126 à 140) de calcul des alignements candidats, des scores d'AC et des scores de PAP pour la détermination si la chaîne de recherche correspond à la chaîne de référence.

**7.** Procédé mis en oeuvre par ordinateur selon l'une quelconque des revendications précédentes, comprenant en outre :

- pour chacune des chaînes de référence, le calcul d'une totalité de n-grammes contenus dans au moins un des jetons de référence dans la chaîne de référence ; et le stockage des n-grammes en tant que clés d'index avec une référence à la chaîne de référence dans un index consultable, l'index comprenant les n-grammes et des données supplémentaires à évaluer pour le calcul du score d'AC et/ou du score de PAP ;
- le calcul de la totalité des n-grammes contenus dans chacun des jetons de recherche dans la chaîne de recherche ;
- l'utilisation d'au moins un des n-grammes de la chaîne de recherche en tant que valeur de clé de recherche pour la recherche de l'index pour l'identification d'un sous-ensemble des chaînes de référence dans une base de données, les chaînes de référence dans le sous-ensemble comprenant au moins un n-gramme qui est identique à un n-gramme créé à partir de la chaîne de recherche ;
- dans lequel la création des alignements candidats, le calcul du score d'AC, la création de l'alignement optimal, le calcul des scores de PAP et la prédiction sont réalisés sélectivement pour les chaînes de référence contenues dans le sous-ensemble de chaînes de référence contenues dans le sous-ensemble de chaînes de référence.

**8.** Procédé mis en oeuvre par ordinateur selon l'une quelconque des revendications précédentes :

- dans lequel la création de l'ensemble étendu de jetons de recherche comprend :

• la création automatique d'une totalité de combinaisons combinatoires possibles de deux des jetons de recherche ou plus ;
• la concaténation de chacune des combinaisons créées pour former l'un des jetons de recherche concaténés utilisés en tant qu'un des premiers partenaires d'alignement ; et/ou

- dans lequel la création de l'ensemble étendu de jetons de référence comprend :

• la création automatique d'une totalité de combinaisons combinatoires possibles de deux des jetons de référence ou plus ;
• la concaténation de chacune des combinaisons créées pour former l'un des jetons de référence concaténés utilisés en tant qu'un des seconds partenaires d'alignement.

9. Procédé mis en oeuvre par ordinateur selon la revendication 8, la création automatisée de la pluralité de combinaisons combinatoires possibles de deux des jetons de recherche ou de référence ou plus étant réalisée de telle sorte qu'un ordre d'origine des jetons dans la chaîne respective n'a pas d'impact sur la combinaison de jetons, moyennant quoi un ou plusieurs des premiers et/ou seconds partenaires d'alignement sont créés par concaténation de jetons conformément à l'ordre d'origine desdits jetons dans leur chaîne source respective et un ou plusieurs autres parmi les premiers et/ou seconds partenaires d'alignement sont créés par concaténation de jetons dans un ordre différent de l'ordre d'origine desdits jetons dans leur chaîne source respective.

10. Procédé mis en oeuvre par ordinateur selon l'une quelconque des revendications 8 à 9, la création automatique de la pluralité des combinaisons combinatoires possibles de deux des jetons de recherche ou de référence ou plus étant réalisée de sorte que seuls les jetons adjacents les uns aux autres dans la chaîne respective sont combinés.

11. Procédé mis en oeuvre par ordinateur selon l'une quelconque des revendications 8 à 10,

- la création automatisée de la pluralité de combinaisons combinatoires possibles des deux jetons de recherche ou plus étant réalisée de telle sorte que le nombre maximal des jetons de recherche combinés pour former un jeton de recherche concaténé est inférieur à 4, préférentiellement inférieur à 3 des jetons de recherche ; et/ou
- la création automatisée de la pluralité de combinaisons combinatoires possibles des deux jetons de référence ou plus étant réalisée de telle sorte que le nombre maximal des jetons de référence combinés pour former un jeton de référence concaténé est inférieur à 4, préférentiellement inférieur à 3 des jetons de référence.

12. Procédé mis en oeuvre par ordinateur selon l'une quelconque des revendications précédentes, le score d'AC étant choisi dans un groupe comprenant :

- un score de similitude syntactique ;
- un score de similitude phonétique ;
- des scores de similitude basés sur un n-gramme ;
- des scores de similitude basés sur les caractères omis ;
- un score de similitude sémantique ;
- une combinaison de deux des scores de similitude susmentionnés ou plus, dans lequel la combinaison peut en particulier être une moyenne, un minimum, un maximum et/ou un quartile de deux des algorithmes de combinaison basés sur jetons susmentionnés ou plus.

13. Procédé mis en oeuvre par ordinateur selon l'une quelconque des revendications précédentes,

- le procédé étant mis en oeuvre dans un terminal couplé de manière fonctionnelle au capteur optique et/ou
- le procédé étant mis en oeuvre dans une architecture client-serveur dans lequel une application client est instanciée dans le terminal et une application serveur est instanciée sur un ordinateur serveur connecté au terminal via un réseau, l'application client étant conçue pour l'obtention de la chaîne de recherche et l'envoi de la chaîne de recherche à l'application serveur, dans lequel l'application serveur est conçue pour réaliser la création et l'alignement des partenaires d'alignement, des scores d'AC, des scores de PAP et du score de prédiction et pour renvoyer un résultat si au moins une chaîne de référence correspondante a été trouvée pour la chaîne de recherche ou non et dans lequel l'application client est conçue pour accorder ou refuser l'accès.

14. Procédé mis en oeuvre par ordinateur selon l'une quelconque des revendications précédentes, le procédé étant un procédé en temps réel conçu pour accorder ou refuser l'accès en temps réel et/ou étant répété automatiquement pour vérifier de manière répétée si l'entité requérante doit être autorisée à accéder à la ressource.

15. Système de contrôle d'accès (800, 850) comprenant :

- un stockage de données volatil ou non volatil (808) comprenant une ou plusieurs chaînes de référence (204, 810), chaque chaîne de référence représentant une entité appelée entité de référence ;
- un capteur optique (864) conçu pour capturer (110) un motif optique (868) présenté au capteur sur un document (866) attribué à une entité (856) appelée entité requérante ;
- un système de traitement de données distribué ou monolithique (800, 850, {900, 824}, {900, 802}) conçu pour :

• la tokénisation (104) de chacune des chaînes de référence en un ou plusieurs jetons de référence (238, 240) ;
• le décodage (111) du motif optique pour obtenir une chaîne de recherche (202) représentant l'entité requérante (856) ;
• la tokénisation (112) de la chaîne de recherche en jetons de recherche (232, 234, 236) ;
• la création (113) d'un ensemble étendu de jetons de recherche constitués d'un mélange des jetons de recherche et de jetons de recherche concaténés, chaque jeton de recherche concaténé étant créé par concaténation de deux des jetons de recherche ou plus ;
• pour chacune des chaînes de référence, la réalisation, jusqu'à ce qu'une correspondance soit trouvée ou que toutes les chaînes de référence aient été traversées :

◦ la création (128) d'un ensemble étendu de jetons de référence constitués d'un mélange des jetons de référence et de jetons de référence concaténés, chaque jeton de référence concaténé étant créé par concaténation de deux des jetons de référence de la chaîne de référence ou plus ;
◦ la création (129) d'un ensemble (200, 300) d'alignements candidats, chaque alignement candidat alignant un premier partenaire d'alignement choisi dans l'ensemble étendu de jetons de recherche avec un second partenaire d'alignement choisi dans l'ensemble étendu de jetons de référence ;
◦ le calcul (130) d'un score d'alignement candidat - score d'AC - pour chacun des alignements candidats créés pour la chaîne de référence, le score d'AC indiquant une similitude des premier et second partenaires d'alignement ;
◦ l'identification (132) d'un ou de plusieurs alignements candidats (250, {302, 304}) ayant les scores d'AC les plus élevés et qui - s'ils sont combinés les uns aux autres - comprennent le plus grand nombre des jetons de recherche mais ne comprennent aucun des jetons de recherche individuels deux fois, les un ou plusieurs alignements candidats identifiés représentant l'alignement optimal de la chaîne de recherche et de la chaîne de référence ;
◦ le calcul (134) d'un score d'AC agrégé à partir des scores d'AC de l'alignement optimal identifié ;
ο sélectivement dans le cas où le score d'AC agrégé est au-dessus d'un seuil de score d'AC, le calcul (136) d'un ou de plusieurs scores de partenaires d'alignements appariés - scores de PAP (602, 604, 604) pour chacun des alignements candidats dans les alignements optimaux, chaque score de PAP indiquant la similitude des premier et second partenaires d'alignement dans cet alignement candidat, les scores de PAP fournissant une indication plus exacte de la similitude des partenaires d'alignement appariés que les scores d'AC ;
◦ le calcul (140) d'un score de prédiction indiquant une probabilité que la chaîne de référence représente la même entité que la chaîne de recherche en tant que fonction du ou des scores de PAP de tous les alignements candidats dans l'alignement optimal ;
◦ si le score de prédiction est supérieur à un seuil de prédiction, le renvoi (142) de la chaîne de référence comme correspondance ; et
◦ l'accord de l'accès de l'entité requérante (856) à une ressource à contrôle d'accès en fonction du score de prédiction calculé pour les chaînes de référence traversées, la ressource étant choisie dans un groupe comprenant une fonction logicielle, une fonction matérielle, un service, un produit, un emplacement et une région géographique.

```
┌────────────────────────────────────────────────────────────────┐  ⌐ 102
│              Providing one or more reference strings             │
└────────────────────────────────────────────────────────────────┘
                                  │
                                  ▼
┌────────────────────────────────────────────────────────────────┐  ⌐ 104
│    Tokenizing each of the reference strings into one or more reference tokens    │
└────────────────────────────────────────────────────────────────┘
                                  │
                                  ▼
┌────────────────────────────────────────────────────────────────┐  ⌐ 110
│                    Capturing an optical pattern                  │
└────────────────────────────────────────────────────────────────┘
                                  │
                                  ▼
┌────────────────────────────────────────────────────────────────┐  ⌐ 111
│            Decoding the optical pattern to obtain a search string            │
└────────────────────────────────────────────────────────────────┘
                                  │
                                  ▼
┌────────────────────────────────────────────────────────────────┐  ⌐ 112
│                Tokenizing the search string into search tokens               │
└────────────────────────────────────────────────────────────────┘
                                  │
                                  ▼
┌────────────────────────────────────────────────────────────────┐  ⌐ 114
│       Identifying a name typology for each of the search and reference strings       │
└────────────────────────────────────────────────────────────────┘
                                  │
                                  ▼
┌────────────────────────────────────────────────────────────────┐  ⌐ 116
│     Normalizing the search and reference strings based on their respective typology     │
└────────────────────────────────────────────────────────────────┘
                                  │
                                  ▼
        ╱───────────────────────────────────────────────────╲       ⌐ 126
   ────►◄                For each of the reference strings:          ►
        ╲───────────────────────────────────────────────────╱
                                  │
                                  ▼
┌────────────────────────────────────────────────────────────────┐  ⌐ 118
│     Computing a prefilter score based on the search and reference string typologies     │
└────────────────────────────────────────────────────────────────┘
                                  │
                                  ▼
┌────────────────────────────────────────────────────────────────┐  ⌐ 120
│    Comparing prefilter score with a rejection prefilter score and an acceptance prefilter    │
│                                 score                           │
└────────────────────────────────────────────────────────────────┘
```

**PFS >PFS**$_{acceptance}$                                    **PFS <PFS**$_{rejection}$

⌐ 124

```
┌──────────────────────┐                              ┌──────────────────────┐  ⌐ 122
│    Accepting match    │   PFS$_{rejection}$ <PFS >PFS$_{acceptance}$   │    Rejecting match    │
└──────────────────────┘                              └──────────────────────┘
                                  │
                                  ▼
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐  [...]
│               Detailed, token-based matching                    │
└ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┘
                                  │
                                  ▼
```

**Fig. 1a**

126 — Detailed, token-based matching

127 — Creating an extended set of reference tokens

128 — Creating an extended set of search tokens

129 — Creating a set of candidate alignments for the extended set of search tokens and the extended set of reference tokens of the current reference string

130 — Computing a candidate-alignment score – CA score – for each of the candidate alignments created for the reference string

132 — Identifying one or more candidate alignments having the highest CA scores and which in combination comprise the largest number of the search tokens but no duplicates

134 — Computing an aggregated CA score from the CA scores of the optimum alignment

136 — If the aggregated CA score is above a CA score threshold, for each alignment in the optimal token alignment, computing one or more paired-alignment-partner-scores – PAP scores, the PAP score being indicative of the similarity of the aligned 1st and 2nd alignment partners

138 — If the aggregated CA score is belwo a CA score threshold, rejecting match

140 — Computing a prediction score indicating the likelihood of the reference string representing the same person as the search string as a function of at least the one or more PAP scores of all candidate alignments in the optimal alignment

142 — If the prediction score is above the prediction threshold, accepting match

144 — If the prediction score is below the prediction threshold, rejecting match

Select next reference string!

Fig. 1b

Search String    202                     Reference String    204

| Andrea | | Smith | | Lee |            | Andreas |    | Leesmith |

└─230      └─232    └─234               └─236         └─238

## CANDIDATE ALIGNMENTS (max. 3 concatenated tokens)

| Andrea |                              | Andrea |
| Andreas |      CA score 1             | Leesmith | Andreas |    CA score 4

| Andrea |
| Leesmith |     CA score 2

| Andrea |                                    CA score 3
| Andreas | Leesmith |

**206**

---

**208**
| Andrea | Smith |
| Andreas |          CA score 5

| Andrea | Smith |
| Leesmith |          CA score 6

| Andrea | Smith |
| Andreas | Leesmith |

| Andrea | Smith |
| Leesmith | Andreas |

---

**210**
| Smith | Andrea |
| Andreas |

| Smith | Andrea |
| Leesmith |

| Smith | Andrea |
| Andreas | Leesmith |

| Smith | Andrea |
| Leesmith | Andreas |

---

**212**
| Smith | Lee |
| Andreas |

| Smith | Lee |
| Leesmith |

| Smith | Lee |
| Andreas | Leesmith |

| Smith | Lee |
| Leesmith | Andreas |

---

**214**
| Andrea | Smith | Lee |
| Andreas |

| Andrea | Smith | Lee |
| Leesmith |            [...]

---

**215**
| Andrea | Lee | Smith |
| Andreas | Leesmith |

| Andrea | Lee | Smith |
| Leesmith | Andreas |

[...]

## Fig. 2A

Fig. 2B

**Search String** <u>202</u>         **Reference String** <u>204</u>

| Andrea |  | Smith |  | Lee |     | Andreas |  | Leesmith |

230   232   234     236     238

## CANDIDATE ALIGNMENTS (max. 2 concatenated tokens)

300

| Andrea |  CA score 1          | Andrea |  CA score 4
| Andreas |  302               | Leesmith | Andreas |

| Andrea |  CA score 2
| Leesmith |

| Andrea |  CA score 3
| Andreas | Leesmith |

<u>206</u>

<u>208</u>
| Andrea | Smith |
| Andreas |  CA score 5

| Andrea | Smith |
| Leesmith |  CA score 6

| Andrea | Smith |
| Andreas | Leesmith |

| Andrea | Smith |
| Leesmith | Andreas |

<u>210</u>
| Smith | Andrea |
| Andreas |

| Smith | Andrea |
| Leesmith |

| Smith | Andrea |
| Andreas | Leesmith |

| Smith | Andrea |
| Leesmith | Andreas |

<u>212</u>
| Smith | Lee |
| Andreas |

| Smith | Lee |
| Leesmith |

| Smith | Lee |
| Andreas | Leesmith |

| Smith | Lee |
| Leesmith | Andreas |

<u>218</u>
| Lee | Smith |
| Andreas |

| Lee | Smith |
| Leesmith |  304

| Lee | Smith |
| Andreas | Leesmith |

| Lee | Smith |
| Leesmith | Andreas |

## Fig. 3A

Fig. 3B

OPTIMAL ALIGNMENT (Fig. 2)

Fig. 4

OPTIMAL ALIGNMENT (Fig. 3)

Fig. 5

COMPUTING PAP SCORES FOR EACH ALIGNMENT IN THE OPTIMAL ALGIMENT

PAPSC-Sy1
PAPSCp-Ph1
PAPSC-Se1

PAPSC-Sy2
PAPSCp-Ph2
PAPSC-Se2

302    304    502

Andrea
Andreas

Lee Smith
Leesmith

◯ Syntactic PAP- score **602**

◇ Phonetc PAP- score **604**

⬡ Semantic PAP- score **606**

**Fig. 6**

COMPUTING AGGREGATE PAP SCORES FOR EACH PAP SCORE TYPE

AGG-PAPSC-Sy
AGG-PAPSCp-Ph
AGG-PAPSC-Se3

Andrea
Andreas

Lee Smith
Leesmith

502

⬤ Aggregate Syntactic PAP- score **702**

◆ Aggregate Phonetc PAP- score **704**

⬢ Aggregate Semantic PAP- score **706**

**Fig. 7**

Fig. 8

Distributed Server-CS 900

**904**
Database Server

**808**
Database

**810**
Reference Strings
xxxxxx
xxxxxx
xxxxxx

**906**
Index Server

**812**
Reference String Index

**916**
Mulitcore Appl. Server

**914**
Mulitcore Appl. Server

**908**
Frontend Server

**910**
Client Interface

**912**
Batch Processing Module

**Fig. 9**

**866**
Document

**868**
MRZ/
Code

Terminal/Watchdog-CS 850

**854**
GUI

**864**
Sensor

**858**
String
Matching &
Prediction

**852**
Decision Software

...**decides to...**
Grant Access/Block Access
Perform Transaction/Block Transaction
Open door/close door

**862**
OCR/Optical Code Decoding Module

**860**
Sensitive
Data,
Protected
room or
Function

856

**Fig. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190354596 A1
- US 20150379127 A1
- US 20130124525 A1

- WO 2008043582 A
- EP 2788897 B1

**Non-patent literature cited in the description**

- **ODELL, MARGARET KING.** The profit in records management. *Systems. New York,* 1956, vol. 20, 20
- **LAWRENCE PHILIPS.** Hanging on the Metaphone. *Computer Language,* December 1990, vol. 7 (12

- **MIKOLOV, TOMAS ; YIH, WEN-TAU ; ZWEIG, GEOFFREY.** Linguistic Regularities in Continuous Space Word Representations. *Hlt-Naacl,* 2013, 746-751